# EUROPÄISCHE PATENTSCHRIFT

(11) **EP 3 141 406 B1**
(45) Veröffentlichungstag und Bekanntmachung des Hinweises auf die Patenterteilung: **25.03.2020**
(21) Anmeldenummer: 16187841.8
(22) Anmeldetag: 08.09.2016
(51) Int. Cl.: B60D 1/06, B60D 1/62, B60D 1/54

(54) **ANHÄNGEKUPPLUNG**
TRAILER COUPLING
ATTELAGE

(30) Priorität: 11.09.2015 DE 102015115357
(43) Veröffentlichungstag der Anmeldung: 15.03.2017
(73) Patentinhaber: ACPS Automotive GmbH, 71706 Markgröningen (DE)
(72) Erfinder: Kadnikov, Aleksej, 71229 Leonberg (DE); Gentner, Wolfgang, 71711 Steinheim (DE); Rimmelspacher, Bernhard, 76287 Rheinstetten (DE)
(74) Vertreter: Hoeger, Stellrecht & Partner Patentanwälte mbB

(56) Entgegenhaltungen:
- EP-A1- 2 266 820
- DE-A1- 19 858 978

## Beschreibung

Die Erfindung betrifft eine Anhängekupplung umfassend einen zwischen einer Arbeitsstellung und einer Ruhestellung bewegbaren Kugelhals mit einem an einem ersten Ende angeordneten Schwenklagerkörper und einer an einem zweiten Ende angeordneten Kupplungskugel, eine fahrzeugfest angeordnete Schwenklagereinheit, mittels welcher der Schwenklagerkörper um die Schwenkachse zwischen der Arbeitsstellung und der Ruhestellung verschwenkbar aufgenommen ist, und eine Drehblockiereinrichtung mit mindestens zwei Drehblockierkörpern, die mittels eines Führungskörpers in einer Führungsrichtung mit mindestens einer Komponente in radialer Richtung zur Schwenkachse bewegbar geführt sind, wobei die Drehblockierkörper in der Arbeitsstellung durch Bewegung in der Führungsrichtung in eine Drehblockierstellung bringbar sind und in dieser mit einer Aufnahme im Schwenklagerkörper in Eingriff stehen, um eine Schwenkbewegung des Schwenklagerkörpers um die Schwenkachse relativ zum Führungskörper zu blockieren, und in eine Lösestellung bringbar sind und in dieser mit der jeweiligen Aufnahme außer Eingriff stehen, und mit einem für jeden der Drehblockierkörper jeweils eine quer zur Führungsrichtung verlaufende Keilfläche aufweisenden und um die Schwenkachse drehbar angeordneten Betätigungskörper, durch dessen Drehbewegung in einer Betätigungsrichtung die mindestens zwei Drehblockierkörper in der Führungsrichtung bewegbar und beaufschlagbar sind.

Derartige Anhängekupplungen sind beispielsweise aus der EP 1 741 572 A1 bekannt. Die EP 2 266 820 A1 offenbart eine Anhängekupplung gemäß dem Oberbegriff von Anspruch 1.

Bei derartigen Anhängekupplungen besteht jedoch grundsätzlich die Problemstellung, diese möglichst kompakt und konstruktiv möglichst einfach aufzubauen, um diese auch bei beengten Raumverhältnissen einsetzen zu können.

Diese Aufgabe wird bei einer Anhängekupplung der eingangs beschriebenen Art erfindungsgemäß dadurch gelöst, dass eine von der Drehblockiereinrichtung unabhängige Ruhestellungsrasteinrichtung vorgesehen ist, welche in einer Freigabestellung eine Bewegung des Schwenklagerkörpers relativ zum Führungskörper zulässt und in einer Ruhestellungsraststellung den Schwenklagerkörper relativ zu dem Führungskörper drehfest festlegt und zumindest in der der Ruhestellung entsprechenden Drehstellung des Schwenklagerkörpers selbsttätig in die Raststellung übergeht.

Der Vorteil der erfindungsgemäßen Lösung ist darin zu sehen, dass bei dieser das Festlegen des Kugelhalses in der Ruhestellung unabhängig von der Drehblockierstellung erfolgen kann und die Drehblockierstellung primär auf die Belastungen in der Arbeitsstellung ausgelegt werden kann, während die Belastungen in der Ruhestellung des Kugelhalses weit geringer sind und somit auch entsprechend die Ruhestellungsrasteinrichtung entsprechend einfacher ausgelegt werden kann.

Prinzipiell wäre es denkbar, die Ruhestellungsrasteinrichtung so auszubilden, dass diese selbsttätig, beispielsweise elektrisch bei Erreichen der Ruhestellung eine Verrastung auslöst.

Um die Verrastung möglichst funktionssicher zu gestalten ist vorzugsweise vorgesehen, dass die Ruhestellungsrasteinrichtung bei Erreichen der der Ruhestellung entsprechenden Drehstellung des Schwenklagerkörpers aufgrund eines in dieser Ruhestellungsrasteinrichtung vorgesehenen Federelements selbsttätig in die Raststellung übergeht, so dass keine durch eine Steuerung erforderliche Betätigung eines Rastelements erforderlich ist, sondern eine mechanisch selbsttätige Funktion der Ruhestellungsrasteinrichtung vorliegt, die eine hohe Zuverlässigkeit gewährleistet.

Um die Ruhestellungsrasteinrichtung in geeigneter Weise von der Ruhestellungsraststellung in die Freigabestellung bewegen zu können, ist vorzugsweise vorgesehen, dass die Ruhestellungsrasteinrichtung in Abhängigkeit von einem bestimmten Funktionszustand der Anhängekupplung lösbar ist.

Beispielsweise ist der Funktionszustand der Anhängekupplung ein Steuerungsbefehl zum Verschwenken des Kugelhalses von der Ruhestellung in die Arbeitsstellung oder auch bereits ein beginnendes Verschwenken des Kugelhalses von der Ruhestellung in die Arbeitsstellung.

Um den Übergang der Ruhestellungsrasteinrichtung von der Ruhestellungsraststellung in die Freigabestellung in einfacher Weise veranlassen zu können, ist vorgesehen, dass die Ruhestellungsrasteinrichtung zum Beginn eines Verschwenkens des Schwenklagerkörpers von der Ruhestellung in die Arbeitsstellung lösbar ist.

Eine vorteilhafte Lösung sieht dabei vor, dass die Ruhestellungsrasteinrichtung durch eine elektrisch betreibbare Antriebseinheit von der Ruhestellungsraststellung in die Freigabestellung überführbar ist.

Beispielsweise könnte eine derartige Antriebseinheit direkt auf einen Rastkörper der Ruhestellungsrasteinrichtung einwirken, um diesen von der Ruhestellungsraststellung in die Freigabestellung zu bewegen.

Eine besonders vorteilhafte Lösung sieht vor, dass eine zum Verschwenken des Kugelhalses vorgesehene Antriebseinheit über einen Schwenkantrieb für den Kugelhals die Ruhestellungsrasteinrichtung in die Freigabestellung überführt.

Der Vorteil dieser Lösung ist darin zu sehen, dass über den Schwenkantrieb in einfacher Weise sichergestellt werden kann, dass die Ruhestellungsrasteinrichtung erst zu Beginn des Verschwenkens des Schwenklagerkörpers und damit des Kugelhalses aus der Ruhestellung heraus in die Freigabestellung überführt wird.

Eine besonders einfache Lösung sieht dabei vor, dass der Schwenkantrieb vor einem Verschwenken des Schwenklagerkörpers die Ruhestellungsrasteinrichtung in die Freigabestellung überführt.

Hinsichtlich der Ausbildung der Ruhestellungsrasteinrichtung wurden bislang keine näheren Angaben gemacht.

So sieht eine besonders einfache Lösung vor, dass die Ruhestellungsrasteinrichtung einen in einem der Körper angeordneten und in einer Rastrichtung bewegbaren Rastkörper umfasst, der mit einer in einem anderen der Körper angeordneten Rastaufnahme in Eingriff bringbar ist.

Diese Lösung benötigt keinen zusätzlichen Bauraum und erlaubt somit eine besonders einfache Ausbildung der Ruhestellungsrasteinrichtung.

Besonders einfach ist die Ausbildung der Ruhestellungsrasteinrichtung dann, wenn der in der Rastrichtung bewegbare Rastkörper im Führungskörper angeordnet ist und die Rastaufnahme in dem Schwenklagerkörper angeordnet ist.

Hinsichtlich der Ausrichtung der Rastrichtung wurden ebenfalls im Zusammenhang mit den bisherigen Ausführungsbeispielen keine näheren Angaben gemacht.

So sieht eine vorteilhafte Lösung vor, dass die Rastrichtung parallel zur Schwenkachse verläuft.

Um auf mechanische Art und Weise in besonders einfacher Weise den Rastkörper von der Ruhestellungsraststellung in die Freigabestellung bewegen zu können, ist vorzugsweise vorgesehen, dass der Rastaufnahme ein Rastlösekörper zugeordnet ist, der bei Betätigung den Rastkörper aus der Rastaufnahme verdrängt und somit diesen in die Freigabestellung überführt.

Hinsichtlich der Betätigung des Rastlösekörpers ist es besonders günstig, wenn der Rastlösekörper durch einen Schwenkantrieb für den Schwenklagerkörper betätigbar ist.

Eine hinsichtlich ihrer Einfachheit besonders günstige Lösung sieht in diesem Zusammenhang vor, dass der Schwenkantrieb zum Verschwenken des Schwenklagerkörpers von der Ruhestellung in die Arbeitsstellung zunächst mit Freigang relativ zum Schwenklagerkörper bewegbar ist und dann den Schwenklagerkörper zwischen der Ruhestellung und der Arbeitsstellung verschwenkt.

Insbesondere wird dabei die Ruhestellungsrasteinrichtung durch den Schwenkantrieb während des Freigangs von der Ruhestellungsraststellung in die Freigabestellung überführt.

Darüber hinaus wird die eingangs genannte Aufgabe alternativ oder ergänzend zu den bislang beschriebenen Lösungen erfindungsgemäß dadurch gelöst, dass eine Lösestellungsrasteinrichtung vorgesehen ist, welche in einer Lösestellung des Betätigungskörpers zwischen einer eine Bewegung des Betätigungskörpers relativ zum Führungskörper freigebenden Rastlösestellung und einer den Betätigungskörper relativ zum Führungskörper festlegenden Raststellung bewegbar ist und zumindest in der Lösestellung des Betätigungskörpers durch ein Federelement in Richtung der Raststellung beaufschlagt ist.

Mit einer derartigen Lösestellungsrasteinrichtung besteht in einfacher Weise die Möglichkeit, die Lösestellung des Betätigungskörpers während der Bewegung des Kugelhalses und somit der Drehbewegung des Schwenklagerkörpers von der Arbeitsstellung in die Ruhestellung in der Lösestellung zu halten.

Mit der erfindungsgemäßen Lösung besteht insbesondere die Möglichkeit, den Schwenklagerkörper ohne dass dieser durch die Drehblockierkörper in irgendeiner Weise beaufschlagt wird, zu drehen und außerdem besteht die Möglichkeit, die Drehblockiereinrichtung beispielsweise lediglich zur Fixierung des Schwenklagerkörpers in der der Arbeitsstellung des Kugelhalses entsprechenden Drehstellung einzusetzen.

Ferner besteht bei der erfindungsgemäßen Lösung die Möglichkeit, den Drehblockierkörper ständig mit einer Kraft, beispielsweise der Kraft einer Feder, derart zu beaufschlagen, dass dieser die Tendenz hat in die Drehblockierstellung über zu gehen, so dass diese Kraftwirkung auf den Betätigungskörper auch dann bestehen kann, wenn dieser in der Lösestellung steht, da die Rasteinrichtung in der Lösestellung die Drehbewegung des Betätigungskörpers aufgrund der Kraftbeaufschlagung verhindert.

Insbesondere ist bei der erfindungsgemäßen Lösung vorgesehen, dass die Lösestellungsrasteinrichtung in der Lösestellung des Betätigungskörpers dann selbständig in die Raststellung übergeht, wenn der Schwenklagerkörper die der Arbeitsstellung entsprechende Drehstellung verlassen hat.

Insbesondere ist bei der erfindungsgemäßen Lösung vorgesehen, dass die Lösestellungsrasteinrichtung bei Erreichen mindestens einer Funktionsstellung der Anhängekupplung von der Raststellung in die Rastlösestellung übergeht und somit wiederum die Bewegung des Betätigungskörpers insbesondere in Richtung deren Drehblockierstellung freigibt.

Insbesondere entspricht dabei die Funktionsstellung nicht der Ruhestellung der Anhängekupplung sondern ist eine die Arbeitsstellung umfassende Stellung.

Im einfachsten Fall ist die Funktionsstellung die der Arbeitsstellung der Anhängekupplung, so dass sichergestellt ist, dass die Lösestellungsrasteinrichtung stets in der Arbeitsstellung von der Raststellung in die Rastlösestellung übergehen kann und somit die Drehblockiereinrichtung in der Arbeitsstellung aktiv sein kann.

Dabei könnte der Übergang von der Raststellung in die Rastlösestellung durch Erfassen verschiedenster die Funktion der Anhängekupplung beeinflussender Größen erfolgen.

Beispielsweise könnte elektronisch die Lage des Kugelhalses, insbesondere die Arbeitsstellung des Kugelhalses, erfasst werden und dann elektronisch der Übergang der Lösestellungsrasteinrichtung von der Raststellung in die Rastlösestellung eingeleitet werden.

Die einzelnen Funktionsstellungen der Anhängekupplung lassen sich besonders einfach dadurch erfassen, dass eine Drehstellung des Schwenklagerkörpers erfasst wird, so dass die Lösestellungsrasteinrichtung in Abhängigkeit von mindestens einer bestimmten Drehstellung des Schwenklagerkörpers von der Raststellung in die Rastlösestellung übergeht.

Besonders vorteilhaft ist es dabei, wenn die Lösestellungsrasteinrichtung bei Erreichen mindestens einer vorgegebenen Drehstellung des Schwenklagerkörpers von der Raststellung in die Rastlösestellung übergeht, das heißt, dass dadurch in einfacher Weise festgelegt werden kann, ab welcher Drehstellung des Schwenklagerkörpers die Lösestellungsrasteinrichtung von der Raststellung in die Rastlösestellung übergehen soll.

Hinsichtlich der Funktionssicherheit hat es sich als besonders günstig erwiesen, wenn die Lösestellungsrasteinrichtung mechanisch gesteuert bei Erreichen der mindestens einen vorgegebenen Drehstellung des Schwenklagerkörpers von der Raststellung in die Rastlösestellung übergeht.

Durch die mechanische Steuerung des Übergangs von der Raststellung in die Rastlösestellung ist eine besonders hohe Funktionssicherheit gewährleistet, da ein wesentlicher Sicherheitsaspekt der ist, dass die Drehblockiereinrichtung in der Arbeitsstellung stets selbständig in die Drehblockierstellung übergeht und in dieser verbleibt.

Hinsichtlich der Ausbildung der Lösestellungsrasteinrichtung im Einzelnen wurden bislang keine näheren Angaben gemacht.

So sieht eine vorteilhafte Ausführungsform vor, dass die Lösestellungsrasteinrichtung einen in einem der Körper in einer Rastrichtung geführten Rastkörper und eine im anderen der Körper vorgesehene Rastaufnahme umfasst, in welcher der Rastkörper in der Raststellung eingreift und in der Rastlösestellung außer Eingriff steht.

Eine derartige mechanische Lösung ist einerseits einfach im Aufbau und andererseits äußerst raumsparend.

Besonders günstig ist es, wenn der Rastkörper in dem Betätigungskörper in der Rastrichtung geführt angeordnet ist und die Rastaufnahme in dem Führungskörper angeordnet ist.

Um bei einem derartigen mechanischen Aufbau die Drehstellungen des Schwenklagerkörpers erfassen zu können, ist vorzugsweise vorgesehen, dass in der Rastaufnahme ein Tastkörper angeordnet ist, welcher das Vorliegen von Drehstellungen des Schwenklagerkörpers relativ zum Führungskörper erfasst und somit mechanisch die Drehstellungen des Schwenklagerkörpers relativ zum Führungskörper erkennen kann.

Insbesondere lässt sich dies vorteilhaft dadurch realisieren, dass der Tastkörper mit einem Tastkopf eine am Schwenklagerkörper angeordnete und mit dem Schwenklagerkörper mitbewegbare Kontur zur Erfassung der einzelnen Drehstellungen des Schwenklagerkörpers abtastet.

Um bei Erreichen der gewünschten Drehstellungen dann in einfacher Weise den Rastkörper von der Raststellung in die Rastlösestellung bewegen zu können, ist vorzugsweise vorgesehen, dass der Tastkörper in mindestens einer vorgegebenen Drehstellung des Schwenklagerkörpers den Rastkörper aus der Rastaufnahme verdrängt und diesen somit von der Raststellung in die Rastlösestellung bewegt.

Hinsichtlich der Rastrichtung des Rastkörpers wurden bislang keine näheren Angaben gemacht.

Beispielsweise könnten der Rastkörper und die Rastaufnahme so ausgerichtet sein, dass die Rastrichtung radial zur Schwenkachse verläuft.

Eine konstruktiv besonders günstig bauende Lösung sieht jedoch vor, dass der Rastkörper in einer parallel zur Schwenkachse verlaufenden Rastrichtung bewegbar ist.

Vorteilhaft ist es, wenn die Drehblockiereinrichtung mindestens drei Drehblockierkörper umfasst.

Eine besonders günstige Lösung sieht vor, dass die Drehblockierkörper derart relativ zum Betätigungskörper angeordnet sind, dass sich mindestens deren quer zur Schwenkachse gerichtete und auf den Betätigungskörper wirkende Reaktionskräfte zumindest zum Teil kompensieren.

Bei einer derartigen Lösung besteht somit der Vorteil, dass der Betätigungskörper nicht so konzipiert sein muss, dass dieser zur Aufnahme der von den Drehblockierkörpern auf diesen wirkenden Reaktionskräfte stabil gelagert sein muss, sondern sehr einfach gelagert werden kann, wenn sich die von den Drehblockierkörpern auf den Betätigungskörper wirkenden Reaktionskräfte zumindest zum Teil aufheben.

Besonders vorteilhaft ist es dabei, wenn die Drehblockierkörper relativ zum Betätigungskörper derart angeordnet sind, dass sich mindestens deren quer zur Schwenkachse gerichtete und auf den Betätigungskörper wirkende Reaktionskräfte im Wesentlichen aufheben.

Besonders vorteilhaft ist es, wenn die Drehblockierkörper relativ zum Betätigungskörper derart angeordnet sind, dass sich deren auf den Betätigungskörper wirkende Reaktionskräfte zumindest zum Teil aufheben.

Grundsätzlich können dabei die Drehblockierkörper relativ zum Betätigungskörper in beliebiger Weise angeordnet sein.

Ein Ausführungsbeispiel sieht dabei vor, dass die Drehblockierkörper um den Betätigungskörper herum angeordnet sind. Mit einer derartigen Lösung ist einerseits eine raumsparende Anordnung der Drehblockierkörper möglich und andererseits eine zumindest teilweise Kompensation der auf den Betätigungskörper wirkenden Reaktionskräfte.

Besonders günstig ist eine derartige Anordnung dann, wenn die Drehblockierkörper im Wesentlichen symmetrisch zu einer senkrecht zur Schwenkachse verlaufenden Ebene angeordnet sind.

Um eine möglichst spielfreie Drehfixierung des Schwenklagerkörpers zu erreichen, ist vorzugsweise vorgesehen, dass mindestens zwei der Drehblockierkörper mit den für diese vorgesehenen Aufnahmen derart zusammenwirken, dass diese einander entgegengesetzt wirkende Drehmomente auf den Schwenklagerkörper erzeugen.

Aufgrund dieser zwei entgegengesetzt zueinander wirkenden Drehmomente besteht die Möglichkeit, den Schwenklagerkörper spielfrei durch die Schwenklagereinheit zu fixieren.

Besonders günstig ist es, wenn der Betätigungskörper sich über einen Winkelbereich um die Schwenkachse erstreckende und in ihrem radialen Abstand zur Schwenkachse variierende Keilflächen aufweist, mit denen die Drehblockierkörper beaufschlagbar sind.

Darüber hinaus wurden im Zusammenhang mit der bisherigen Beschreibung der erfindungsgemäßen Lösung keine Angaben darüber gemacht, wie die Drehblockierkörper ihrerseits in der Führungsrichtung geführt sein sollen.

Beispielsweise wäre es denkbar, den Drehblockierkörper durch eine Führungsaufnahme in dem Schwenklagerkörper zu führen und stationäre Aufnahmen vorzusehen, mit denen der mindestens eine Drehblockierkörper in Eingriff oder außer Eingriff bringbar ist.

Besonders vorteilhaft ist es jedoch, wenn der Drehblockierkörper durch einen sich in radialer Richtung an den Schwenklagerkörper anschließenden Führungskörper geführt ist.

Vorzugsweise ist dabei der Führungskörper so ausgebildet, dass er eine Führungshülse mit der Führungsaufnahme für den jeweiligen Drehblockierkörper aufweist.

Ein derart vorgesehener Führungskörper lässt sich vorteilhaft insbesondere auch dazu einsetzen, dass mit dem Führungskörper ein Lager für den Betätigungskörper verbunden ist, so dass dadurch der Betätigungskörper in einfacher Weise und günstig gelagert werden kann.

Hinsichtlich der Lagerung des Schwenklagerkörpers selbst in der Schwenklagereinheit wurden bislang ebenfalls keine näheren Angaben gemacht.

So sieht insbesondere eine günstige Lösung vor, dass der Führungskörper ein Schwenklager für den Schwenklagerkörper bildet, so dass der Führungskörper dabei zusätzlich zu der Führungsfunktion noch den Vorteil bietet, die Lagerfunktion für den Schwenkkörper zu übernehmen.

Zweckmäßigerweise ist dabei der Führungskörper so angeordnet, dass er Teil der fahrzeugfest angeordneten Schwenklagereinheit ist.

Im Rahmen der erfindungsgemäßen Lösung sind unterschiedliche Möglichkeiten der relativen Anordnung von Führungskörper, Schwenklagerkörper und Betätigungskörper denkbar.

So wäre eine Lösung denkbar, bei welcher der Betätigungskörper den Führungskörper umschließt und der Schwenklagerkörper vom Führungskörper umschlossen ist, das heißt in den Führungskörper hineingreift.

Eine weitere vorteilhafte Lösung sieht jedoch vor, dass der Betätigungskörper von dem Führungskörper umschlossen ist und dass der Schwenklagerkörper den Führungskörper umgreift.

Hinsichtlich einer möglichst einfachen Konstruktion ist es vorteilhaft, wenn der Schwenklagerkörper einen die Schwenklagereinheit außenliegend umschließenden Außenkörper bildet, der gegenüber der Schwenklagereinheit und dem Führungskörper in Richtung der Schwenkachse unverschiebbar angeordnet ist.

Eine derartige Anordnung des Schwenklagerkörpers hat einerseits den Vorteil eines günstigen räumlichen Aufbaus der Schwenklagereinheit selbst und den Vorteil einer relativ einfachen Abdichtung der Schwenklagereinheit, da der Schwenklagerkörper keine Bewegungen in axialer Richtung der Schwenkachse durchführt.

Vorzugsweise sind zwischen einem Gehäuse der Schwenklagereinheit und beiden Endseiten des Außenkörpers um die Schwenkachse umlaufende Dichtungen vorgesehen, mit welchen eine Abdichtung gegen eindringenden Schmutz und Feuchtigkeit erfolgt.

Hinsichtlich der Stabilität und auch des geringen Raumbedarfs der erfindungsgemäßen Anhängekupplung sieht ein besonders günstiges Ausführungsbeispiel vor, dass das erste Ende des Kugelhalses an dem Außenkörper angesetzt ist.

Damit lässt sich eine besonders einfache und stabile Verbindung zwischen dem Schwenklagerkörper und dem Kugelhals schaffen, ebenfalls ohne den Raumbedarf zu erhöhen.

Ferner ist eine besonders kompakte Bauweise der Anhängekupplung dann gegeben, wenn der Schwenklagerkörper einen die Drehblockiereinrichtung außenliegend umschließenden Außenkörper bildet, der gegenüber dem Führungskörper in Richtung der Schwenkachse unverschiebbar angeordnet ist.

Bei einer günstigen Lösung vorgesehen, dass die Drehblockierkörper durch den Betätigungskörper von einer Lösestellung in eine Drehblockierstellung bewegbar sind.

Vorzugsweise ist dabei der Betätigungskörper so ausgebildet, dass er in der Lösestellung die Lösestellung der Drehblockierkörper zulässt.

Insbesondere sieht eine weitere Ausbildung des Betätigungskörpers vor, dass dieser in der Drehblockierstellung die Drehblockierkörper in ihrer Drehblockierstellung hält.

Um nun sicherzustellen, dass die Drehblockierkörper stets in ihre Drehblockierstellung übergehen, insbesondere dann, wenn keine Betätigung des Betätigungskörpers erfolgt, ist vorzugsweise vorgesehen, dass der Betätigungskörper durch einen elastischen Kraftspeicher, insbesondere durch eine Drehfeder, in Richtung seiner Drehblockierstellung beaufschlagt ist.

Ein derartiger elastischer Kraftspeicher könnte prinzipiell an mehreren Orten angeordnet sein.

Konstruktiv ist es besonders günstig, wenn der elastische Kraftspeicher innerhalb des Führungskörpers angeordnet ist.

Eine weitere konstruktiv günstige Lösung sieht vor, dass der elastische Kraftspeicher auf einer Seite des Betätigungskörpers angeordnet ist.

In diesem Fall lässt sich der elastische Kraftspeicher vorteilhaft mit dem Betätigungskörper koppeln.

Um den Betätigungskörper in geeigneter Weise betätigen zu können, ist vorzugsweise eine Betätigungseinrichtung vorgesehen, mittels welcher der Betätigungskörper von der Drehblockierstellung in die Lösestellung bewegbar ist.

Günstigerweise ist dabei die Betätigungseinrichtung so ausgebildet, dass mit dieser der Betätigungskörper entgegen der Beaufschlagung durch den Kraftspeicher bewegbar ist.

Im Fall eines drehbar vorgesehenen Betätigungskörpers, ist vorgesehen, dass mit der Betätigungseinrichtung der Betätigungskörper entgegengesetzt zur durch den Kraftspeicher bewirkten Drehrichtung verdrehbar ist.

Hinsichtlich der Ausbildung der Betätigungseinrichtung wurden bislang keine näheren Angaben gemacht. So sieht eine vorteilhafte Lösung vor, dass die Betätigungsvorrichtung ein Antriebselement aufweist, welches mit dem Betätigungskörper gekoppelt ist.

Eine derartige Kopplung zwischen dem Antriebselement und dem Betätigungskörper kann in unterschiedlichster Art und Weise ausgebildet sein. Eine Lösung wäre eine direkte Verbindung zwischen dem Antriebselement und dem Betätigungskörper.

Besonders vorteilhaft ist es jedoch, wenn das Antriebselement und der Betätigungskörper über eine Mitnahmekopplungseinrichtung miteinander gekoppelt sind.

Eine derartige Mitnahmekopplungseinrichtung kann in unterschiedlichster Art und Weise ausgebildet sein. Eine vorteilhafte Ausführungsform sieht vor, dass die Mitnahmekopplungseinrichtung einen mitnahmefreien Freigangzustand und einen Mitnahmezustand aufweist.

Eine Ausführungsform einer erfindungsgemäßen Anhängekupplung sieht vor, dass die Mitnahmekopplungseinrichtung so ausgebildet ist, dass ein Bewegen des Antriebselements ausgehend von einer Ausgangsstellung erst nach Durchlaufen eines Freigangzustandes und Erreichen des Mitnahmezustandes in einer Zwischenstellung eine Bewegung des Betätigungskörpers bewirkt.

Im Zusammenhang mit den bisherigen Lösungen wurde lediglich allgemein der Antrieb der Drehblockiereinrichtung erläutert, welcher es erlaubt, einen Übergang der Drehblockiereinrichtung von mindestens einer Drehblockierstellung in eine Freilaufstellung und umgekehrt zu realisieren.

Dabei ist es vorteilhaft, wenn ein motorischer Antrieb für die Betätigung der Drehblockiereinrichtung vorgesehen ist.

Ferner ist es vorteilhaft, wenn ein motorischer Antrieb als Schwenkantrieb für das Ausführen der Schwenkbewegung des Schwenklagerkörpers vorsieht.

Beispielsweise ist es denkbar, zwei motorische Antriebe vorzusehen, wobei ein motorischer Antrieb für die Betätigung der Drehblockiereinrichtung vorgesehen ist und ein motorischer Antrieb zur Durchführung der Schwenkbewegung des Schwenklagerkörpers vorgesehen ist.

Insbesondere da ein Antreiben der Drehblockiereinrichtung stets zu Zeiten erfolgt, in denen keine Schwenkbewegung des Schwenklagerkörpers erfolgen soll, und andererseits eine Schwenkbewegung des Schwenklagerkörpers stets dann erfolgt, wenn kein Antrieb der Drehblockiereinrichtung erforderlich ist, ist es denkbar, eine Umschalteinrichtung vorzusehen, die eine zugeführte Antriebsenergie, beispielsweise von einer Stromquelle, wechselweise von einem Antrieb auf den anderen Antrieb umschaltet, so dass die von einer separaten, beispielsweise kraftfahrzeugseitigen Versorgungseinrichtung zur Verfügung gestellte Antriebsleistung entweder für das Betätigen der Drehblockiereinrichtung oder das Schwenken des Schwenklagerkörpers genutzt werden kann. In diesem Fall ist allerdings über eine entsprechende Sensorik zu erfassen, wann die Drehblockiereinrichtung in der Drehblockierstellung oder der Freilaufstellung steht und wann der Schwenklagerkörper in der der Arbeitsstellung entsprechenden Stellung oder der der Ruhestellung entsprechenden Stellung steht, und entsprechend den von der Sensorik detektierten Stellungen die Antriebsleistung von einem Antrieb auf den anderen umzuschalten.

Im Fall eines Antriebs der Drehblockiereinrichtung unabhängig von dem Antrieb für die Schwenkbewegung des Schwenklagerkörpers besteht das Problem, dass im Fall einer Störung die Schwierigkeit auftritt, eindeutige Ausgangspositionen sowohl für die Schwenkbewegung des Schwenklagerkörpers als auch für die Drehblockiereinrichtung aufzufinden.

Alternativ oder ergänzend zu den bislang beschriebenen Lösungen sieht daher eine vorteilhafte Lösung vor, dass der Antrieb für die Drehblockiereinrichtung und der Antrieb für die Schwenkbewegung des Schwenklagerkörpers durch ein Planetengetriebe gekoppelt sind.

Ein derartiges Planetengetriebe erlaubt es, die beiden Bewegungen miteinander zu koppeln.

Besonders geeignet ist ein derartiges Planetengetriebe, bei dem das Planetengetriebe durch einen einzigen motorischen Antrieb antreibbar ist.

Vorzugsweise ist dabei das Planetengetriebe zwischen einem Abtrieb für die Betätigung der Drehblockiereinrichtung und einem Abtrieb für die Ausführung der Schwenkbewegung des Schwenklagerkörpers derart integriert, dass das Planetengetriebe einen Wechsel zwischen einem Antrieb der Drehblockiereinrichtung und der Schwenkbewegung des Schwenklagerkörpers erlaubt.

Ein Antrieb der verschiedenen Funktionen der erfindungsgemäßen Anhängekupplung ist besonders vorteilhaft dann möglich, wenn ein Planetengetriebe vorgesehen ist, welches von einer motorischen Antriebseinheit angetrieben ist, und wenn ein Abtrieb des Planetengetriebes als Stellantrieb auf den Betätigungskörper wirkt, um diesen von der Drehblockierstellung in die Lösestellung und/oder gegebenenfalls umgekehrt zu bewegen, und wenn ein anderer Abtrieb des Planetengetriebes als Schwenkantrieb auf den Schwenklagerkörper zum Verschwenken des Kugelhalses zwischen der Arbeitsstellung und der Ruhestellung einwirkt.

Der Vorteil der Verwendung eines Planetengetriebes ist darin zu sehen, dass ein derartiges Planetengetriebe in einfacher Weise einen Wechsel von einem Abtrieb zum anderen Abtrieb zulässt und somit eine Antriebseinheit, beispielsweise umfassend einen elektrischen Antriebsmotor und gegebenenfalls einem Getriebe, ausreicht, um wechselseitig über den einen Abtrieb die Bewegungen des Betätigungskörpers anzutreiben und über den anderen Abtrieb die Schwenkbewegung des Kugelhalses zwischen der Arbeitsstellung und der Ruhestellung anzutreiben.

Beispielsweise ist vorgesehen, dass ein Sonnenrad des Planetengetriebes durch den motorischen Antrieb antreibbar ist.

Ferner ist zweckmäßigerweise vorgesehen, dass ein Hohlrad des Planetengetriebes mit dem Abtrieb für die Drehblockiereinrichtung gekoppelt ist.

Ferner ist zweckmäßigerweise vorgesehen, dass ein Planetenradträger des Planetengetriebes mit dem Abtrieb für die Schwenkbewegung gekoppelt ist.

Um bei einem Planetengetriebe, welches durch einen einzigen motorischen Antrieb angetrieben ist, entweder die Drehblockiereinrichtung anzutreiben oder die Schwenkbewegung anzutreiben, ist vorteilhafterweise vorgesehen, dass je nach Hemmung des Antriebs der Drehblockiereinrichtung oder der Schwenkbewegung ein Antreiben der Schwenkbewegung oder der Drehblockiereinrichtung erfolgt.

Eine derartige Hemmung der Schwenkbewegung oder der Drehblockiereinrichtung ist in unterschiedlicher Art und Weise realisierbar.

Die Hemmung der Schwenkbewegung ist in einfacher Weise dadurch realisierbar, dass das Schwenklagerteil relativ zum Führungskörper verriegelbar ist, so dass beim Verriegeln des Schwenklagerteils zwangsläufig eine Hemmung der Schwenkbewegung vorliegt.

Eine Hemmung des Antriebs der Drehblockiereinrichtung kann in unterschiedlichster Art und Weise erfolgen.

Eine besonders günstige Lösung sieht dabei vor, dass die Lösestellungsrasteinrichtung zur Hemmung des Antriebs der Drehblockiereinrichtung vorgesehen ist.

Hinsichtlich der Anordnung des Planetengetriebes relativ zu den üblichen Komponenten der Anhängekupplung wurden bislang keinerlei weitere Angaben gemacht.

So sieht eine vorteilhafte Lösung vor, dass das Planetengetriebe koaxial zur Schwenkachse angeordnet ist.

Eine derartige Lösung ist einerseits besonders platzsparend und erlaubt andererseits eine einfache Integration des Planetengetriebes in die erfindungsgemäße Anhängekupplung.

Besonders vorteilhaft ist es dabei, wenn das Planetengetriebe auf einer dem motorischen Antrieb zugewandten Seite des Betätigungskörpers angeordnet ist, um somit das Planetengetriebe in einfacher Weise zum Antrieb des Betätigungskörpers einsetzen zu können.

Insbesondere ist es dabei günstig, wenn in Richtung der Schwenkachse gesehen das Planetengetriebe auf einer Seite von dem motorischen Antrieb angetrieben ist und auf der gegenüberliegenden Seite einen Abtrieb für den Betätigungskörper aufweist.

Eine konstruktiv besonders zweckmäßige Lösung sieht vor, dass das Planetengetriebe in Richtung der Schwenkachse gesehen zwischen dem motorischen Antrieb und dem Betätigungskörper angeordnet ist.

Hinsichtlich der Anordnung der verschiedenen Komponenten der erfindungsgemäßen Anhängekupplung hat es sich als besonders vorteilhaft erwiesen, wenn das Planetengetriebe, der elastische Kraftspeicher und der Betätigungskörper in Richtung der Schwenkachse gesehen aufeinanderfolgend angeordnet sind.

Eine weitere vorteilhafte Lösung sieht daher vor, dass der Betätigungskörper durch eine Sicherungseinrichtung blockierbar ist.

Besonders vorteilhaft ist eine Lösung, bei welcher der Betätigungskörper durch die Sicherungseinrichtung gegen ein Erreichen seiner inaktiven Stellung blockierbar ist, um sicherzustellen, dass der Betätigungskörper niemals selbstständig, beispielsweise bei einem Bruch des diesen in Richtung seiner aktiven Stellung beaufschlagenden elastischen Kraftspeichers, die Lösestellung der Drehblockierkörper zulässt.

Eine derartige Sicherungseinrichtung ist so ausgebildet, dass diese eine Einwirkung erfordert, um die Blockierung des Betätigungskörpers aufzuheben.

Aus diesem Grund ist zweckmäßigerweise vorgesehen, dass die Betätigungsvorrichtung mit der Sicherungseinrichtung gekoppelt ist, so dass über die Betätigungsvorrichtung auch ein Lösen der Blockierung des Betätigungskörpers durch die Sicherungseinrichtung aufgehoben werden kann.

Vorzugsweise ist dabei die Sicherungseinrichtung derart mit der Betätigungsvorrichtung gekoppelt, dass die Sicherungseinrichtung eine nicht durch eine Betätigung ausgelöste Bewegung des Betätigungskörpers blockiert.

Insbesondere ist die Sicherungseinrichtung so ausgebildet, dass sie bei nichtbetätigter Betätigungsvorrichtung eine Bewegung des Betätigungskörpers in seine Lösestellung blockiert.

Eine zweckmäßige Lösung sieht dabei vor, dass das Antriebselement der Betätigungsvorrichtung, beispielsweise das Abtriebselement des Planetengetriebes, mit der Sicherungseinrichtung gekoppelt ist.

Zweckmäßigerweise lässt sich dabei das Antriebselement, beispielsweise das Abtriebselement des Planetengetriebes, derart ausbilden, dass über das Antriebselement die Einwirkung auf den Betätigungskörper und die Einwirkung auf die Sicherungseinrichtung aufeinander abgestimmt sind, so dass eine Betätigung der Betätigungsvorrichtung einerseits dazu führt, dass die Blockierung des Betätigungskörpers aufgehoben wird und andererseits dazu führt, dass der Betätigungskörper von der aktiven Stellung in die inaktive Stellung bewegt wird.

Beispielsweise ist hierzu vorgesehen, dass das Antriebselement im Zuge seiner Bewegung von der Ausgangsstellung in eine Zwischenstellung die Sicherungseinrichtung von der Sicherungsstellung in die Entsicherungsstellung überführt.

Hinsichtlich der Kopplung zwischen dem Antriebselement und der Sicherungseinrichtung sind die unterschiedlichsten Möglichkeiten denkbar.

Beispielsweise wäre jede Art von Kopplung, beispielsweise auch über eine elektrische Steuerung denkbar.

Eine aufgrund ihrer Einfachheit besonders zweckmäßige Lösung sieht dabei vor, dass das Antriebselement und die Sicherungseinrichtung über eine mechanische Kopplungseinrichtung miteinander gekoppelt sind.

Die mechanische Kopplungseinrichtung ist günstigerweise so ausgebildet, dass sie mittels einer Kulissenbahn die Einwirkung auf die Sicherungseinrichtung steuert.

Weitere Merkmale und Vorteile der erfindungsgemäßen Lösung sind Gegenstand der nachfolgenden Beschreibung sowie der zeichnerischen Darstellung eines Ausführungsbeispiels;
In der Zeichnung zeigen:
- Fig. 1: eine Rückansicht eines Kraftfahrzeugs mit einer erfindungsgemäßen Anhängekupplung;
- Fig. 2: eine Draufsicht auf ein erstes Ausführungsbeispiel einer erfindungsgemäßen Anhängekupplung mit Blick in Fahrtrichtung auf die an einem Fahrzeugheck montierte Anhängekupplung, wobei die Anhängekupplung in ihrer Arbeitsstellung steht;
- Fig. 3: eine Draufsicht auf die Anhängekupplung in Fig. 2 in Richtung der Schwenkachse;
- Fig. 4: eine Ansicht entsprechend Fig. 2 der in der Ruhestellung stehenden Anhängekupplung;
- Fig. 5: eine Draufsicht auf die in der Ruhestellung stehende Anhängekupplung gemäß Fig. 4 in Richtung der Schwenkachse;
- Fig. 6: eine Darstellung eines Schnitts längs Linie 6-6 in Fig. 3;
- Fig. 7: einen Schnitt längs Linie 7-7 in Fig. 6;
- Fig. 8: eine Darstellung eines Schnitts längs Linie 8-8 in Fig. 5;
- Fig. 9: einen Schnitt längs Linie 9-9 in Fig. 8;
- Fig. 10: einen Schnitt längs Linie 10-10 in Fig. 20;
- Fig. 11: einen Schnitt längs Linie 11-11 in Fig. 21;
- Fig. 12: einen Schnitt längs Linie 12-12 in Fig. 10;
- Fig. 13: einen Schnitt längs Linie 13-13 in Fig. 8;
- Fig. 14: einen Schnitt längs Linie 14-14 in Fig. 7,
- Fig. 15: einen Schnitt längs Linie 15-15 in Fig. 9;
- Fig. 16: einen Schnitt längs Linie 16-16 in Fig. 15;
- Fig. 17: einen Schnitt längs Linie 17-17 in Fig. 5;
- Fig. 18: einen Schnitt längs Linie 18-18 in Fig. 17;
- Fig. 19: einen Schnitt längs Linie 19-19 in Fig. 17;
- Fig. 20: einen Schnitt längs Linie 20-20 in Fig. 10 und
- Fig. 21: einen Schnitt längs Linie 21-21 in Fig. 11.

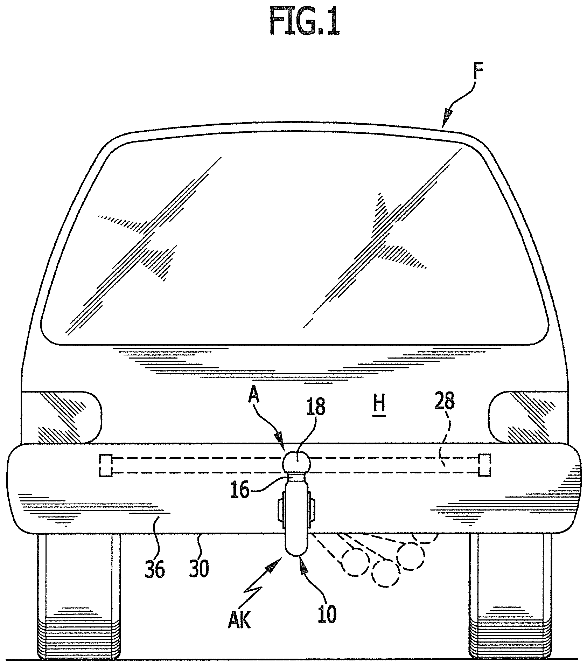

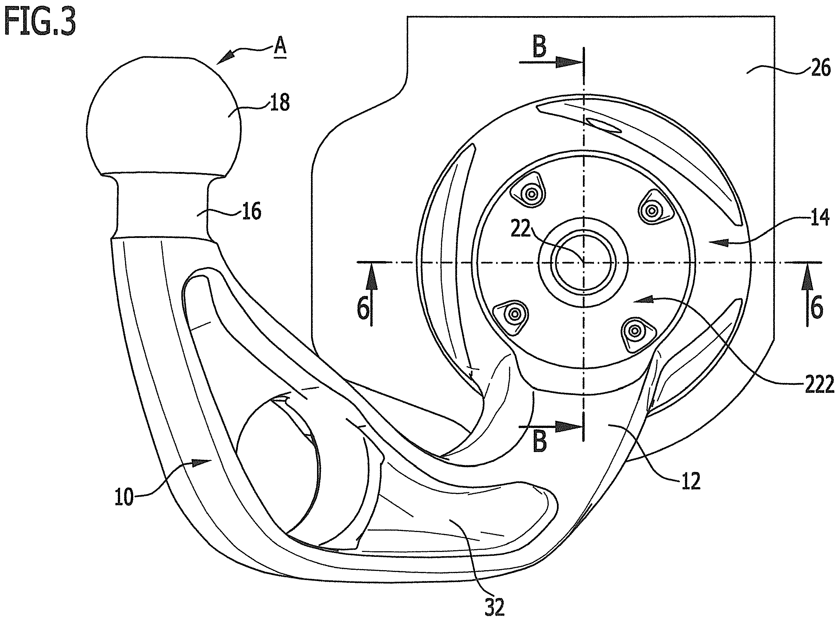

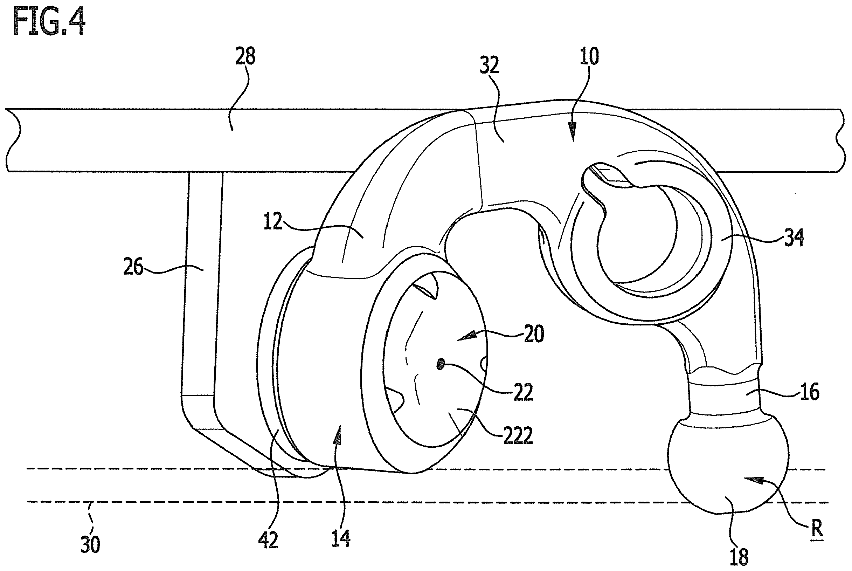

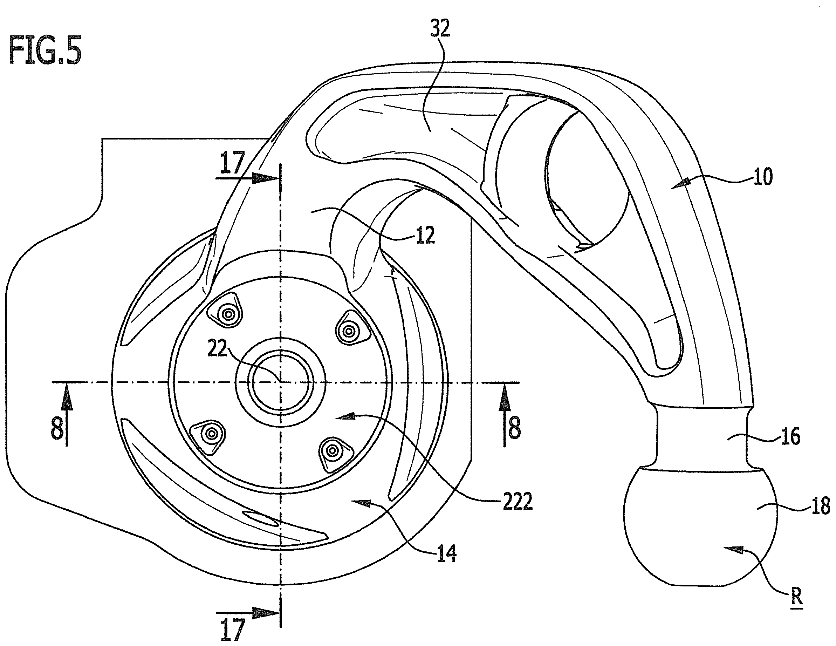

Ein erstes Ausführungsbeispiel einer erfindungsgemäßen Anhängekupplung AK für ein Kraftfahrzeug, dargestellt in Fig. 1, 2 und 3 in einer Arbeitsstellung A und in Fig. 4 und 5 in einer Ruhestellung R, umfasst einen als Ganzes mit 10 bezeichneten Kugelhals, welcher mit einem ersten Ende 12 an einem Schwenklagerkörper 14 gehalten ist und an einem zweiten Ende 16 eine als Ganzes mit 18 bezeichnete Kupplungskugel trägt, an welcher eine Kupplungskugelaufnahme eines Anhängers fixierbar ist.

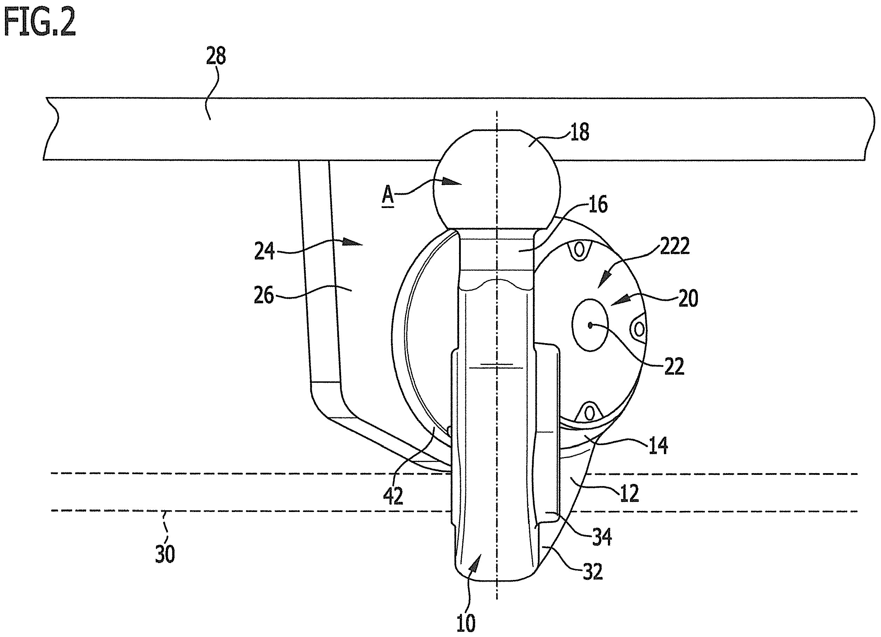

Der Schwenklagerkörper 14 ist durch eine als Ganzes mit 20 bezeichnete Schwenklagereinheit um eine Schwenkachse 22 relativ zu einem fahrzeugfesten Träger 24 schwenkbar gelagert, wobei der Träger 24 vorzugsweise eine die Schwenklagereinheit 20 haltende Tragplatte 26 aufweist, welche sich vorzugsweise in einer zur Schwenkachse 22 senkrechten Ebene erstreckt, und einen fahrzeugfesten Querträger 28 aufweist, welcher in bekannter Weise an einem Heckbereich H einer Fahrzeugkarosserie F befestigbar ist, und zwar so, dass die Schwenklagereinheit 20 und der Träger 24 auf einer einer Fahrbahnoberfläche abgewandten Seite einer Unterkante 30 einer Stoßfängereinheit 36 liegen, und durch die Stoßfängereinheit 36 abgedeckt sind (Fig. 2).

In der in Fig. 1 und 2 dargestellten Arbeitsstellung untergreift der Kugelhals 10 mit einem sich an das erste Ende 12 anschließenden Abschnitt 32 die Unterkante 30 der Stoßfängereinheit 36, so dass das zweite Ende 16 und die Kupplungskugel 18 mitsamt einer Steckdosenaufnahme 34 auf einer der Fahrzeugkarosserie abgewandten Seite der hinteren Stoßfängereinheit 36 stehen, während in der Ruhestellung sowohl die Schwenklagereinheit 20 als auch der gesamte Kugelhals 10 mitsamt der Kupplungskugel 18 von der hinteren Stoßfängereinheit 36 gegen Sicht von hinten abgedeckt sind.

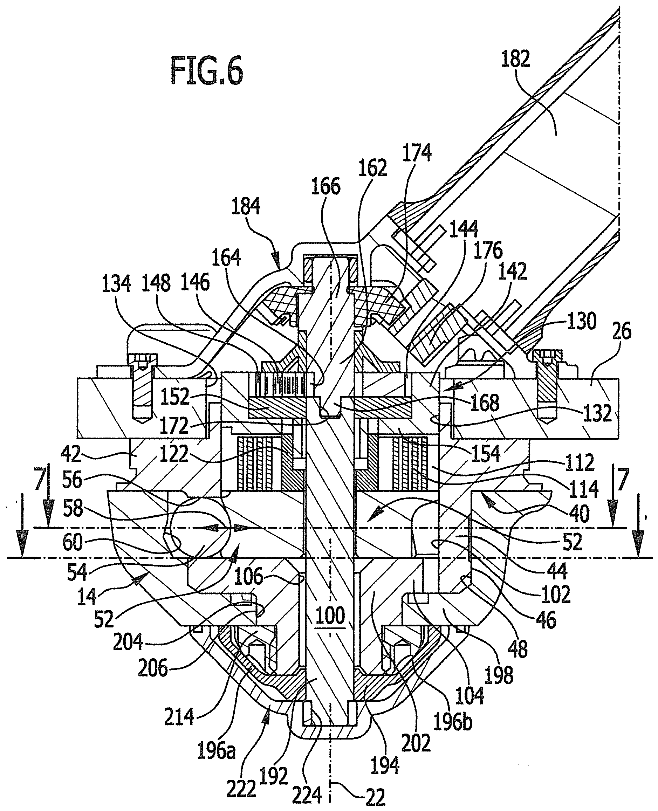

Die Schwenklagereinheit 20 umfasst, wie in Fig. 6 bis 9 dargestellt, einen Führungskörper 40, welcher mit einem Flansch 42 fest mit der Tragplatte 26 verbunden ist und eine sich ausgehend von dem Flansch 42 von der Tragplatte 26 weg erstreckende Führungshülse 44, an welcher der Schwenklagerkörper 14 drehbar gelagert ist.

Hierzu umfasst die Führungshülse 44 eine zylindrische Außenmantelfläche 46, an welcher der Schwenklagerkörper 14 mit einer zylindrischen Innenfläche 48 anliegt und dadurch um die Schwenkachse 22 eine Drehführung um die Achse 22 erfährt, so dass der Schwenklagerkörper 14 derart relativ zum Führungskörper 40 drehbar ist, dass der Kugelhals 10 von der Arbeitsstellung A in die Ruhestellung R und umgekehrt verschwenkbar ist.

Der Führungskörper 40 bildet somit durch seine feste Verbindung mit der Trägerplatte 26 und dem Träger 24 die fahrzeugfeste Drehlagerung für den Schwenklagerkörper 14.

Zur Fixierung des Schwenklagerkörpers 14 in der Arbeitsstellung A ist die Schwenklagereinheit 20 mit einer als Ganzes mit 50 bezeichneten Drehblockiereinrichtung versehen, welche einen Betätigungskörper 52, mehrere durch den Betätigungskörper 52 beaufschlagbare Drehblockierkörper 54, welche in Führungsaufnahmen 56 der Führungshülse 44 in einer im Wesentlichen radial zur Schwenkachse 22 verlaufenden Führungsrichtung 58 bewegbar geführt sind, sowie sich ausgehend von der Innenfläche 48 des Schwenklagerkörpers 14 in diesen hineinerstreckende Aufnahmen 60 umfasst, mit denen die Drehblockierkörper in der Arbeitsstellung A in Eingriff bringbar sind, wobei die Aufnahmen 60 in radialer Richtung zur Schwenkachse 22 zunehmend einen geringeren Abstand voneinander aufweisende Wandflächen haben.

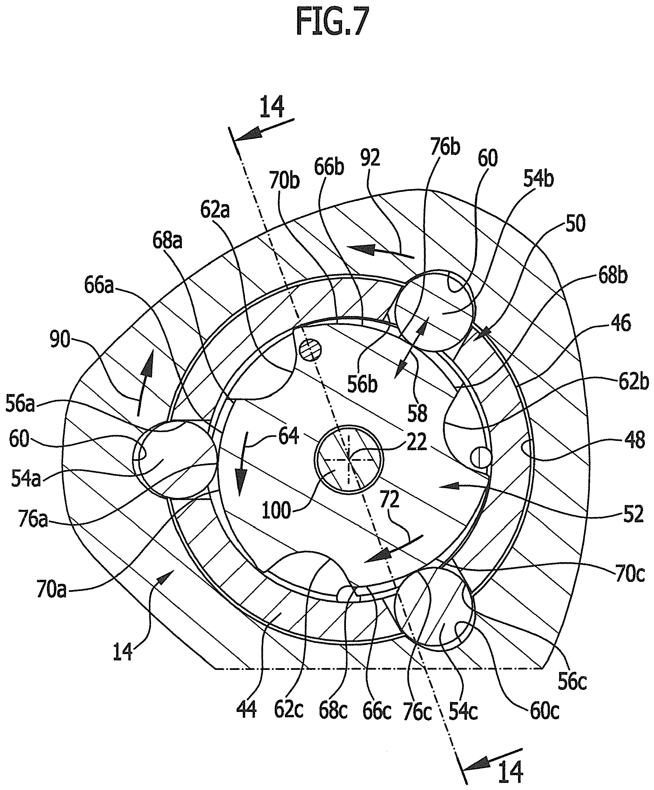

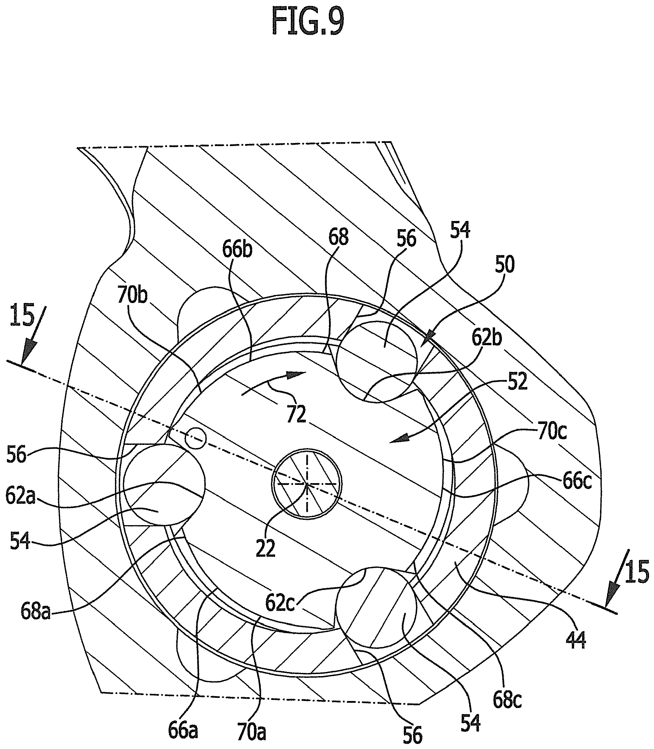

Umfasst beispielsweise die Drehblockiereinrichtung 50, wie im Zusammenhang mit Fig. 7 und Fig. 9 beim ersten Ausführungsbeispiel dargestellt, einen Satz von drei Drehblockierkörpern 54a, 54b und 54c, so weist die Führungshülse 44 einen entsprechenden Satz von drei Führungsaufnahmen 56a, 56b und 56c auf, in welchen die Drehblockierkörper 54a, 54b und 54c in der im Wesentlichen radial zur Schwenkachse 22 verlaufenden Führungsrichtung 58 verschiebbar geführt sind, und der Schwenklagerkörper 14 ist mit einem Satz von ersten Aufnahmen 60a, 60b und 60c versehen, mit welchen die Drehblockierkörper 54a, 54b und 54c in der Arbeitsstellung A in Eingriff bringbar sind.

Zum geeigneten Bewegen und Positionieren der Drehblockierkörper 54 in der Führungsrichtung 58 ist der Betätigungskörper 52 mit einem der Zahl der Drehblockierkörper 54 entsprechenden Satz von insgesamt drei Rückzugsaufnahmen 62a, 62b und 62c und drei sich in einer Umlaufrichtung 64 an die Rückzugsaufnahmen 62a, 62b, 62c anschließenden Druckflächen 66a, 66b und 66c, die als radial zur Schwenkachse 22 wirkende Keilflächen ausgebildet sind, versehen, wobei die Drehblockierkörper 54 in ihrer Lösestellung in die Rückzugsaufnahmen 62a, 62b, 62c soweit eintauchen können, dass sie nicht mehr über die Außenmantelfläche 46 der Führungshülse 44 überstehen, und wobei sich die Druckflächen 66a, 66b, 66c jeweils von einem sich unmittelbar an die jeweilige Rückzugsaufnahmen 62 anschließenden radial innenliegenden Anfangsbereich 68a, 68b und 68c mit zunehmender Erstreckung in der Umlaufrichtung 64 zunehmend radial zur Schwenkachse 22 nach außen erstrecken, bis zu jeweils einem radial außenliegenden Endbereich 70a, 70b und 70c und somit als bei einer Drehbewegung des Betätigungskörpers 52 als Keilflächen auf die Drehblockierkörper 54 wirken, um diese in ihre Drehblockierstellung zu bewegen.

Vorzugsweise verlaufen dabei die Druckflächen 66 als Spiral- oder Evolventensegmente relativ zur Schwenkachse 22.

Um die Drehblockierkörper 54 entweder in ihrer Drehblockierstellung durch Beaufschlagen derselben mit den Druckflächen 66 zwischen dem Anfangsbereich 68 und dem Endbereich 70 zu halten oder in der Lösestellung in die Rückzugsaufnahme 62 eintauchen zu lassen, ist der Betätigungskörper 52 ebenfalls um die Schwenkachse 22, insbesondere koaxial zu dieser, drehbar und zwar so, dass entweder der Satz von Rückzugsaufnahmen 62a, 62b und 62c den Drehblockierkörpern 54 zugewandt ist und diesen, wie in Fig. 9 dargestellt, in seiner inaktiven Stellung die Möglichkeit gibt, in die Rückzugsaufnahmen 62 in radialer Richtung zur Schwenkachse 22 hin einzutauchen, um den jeweiligen Drehblockierkörpern 54 die Möglichkeit zu eröffnen, die ersten Aufnahmen 60 mitsamt dem Schwenklagerkörper 14 hinsichtlich einer Drehung um die Schwenkachse 22 relativ zum Führungskörper 40 freizugeben, so dass der Schwenklagerkörper 14 mit dem Kugelhals 10 relativ zur Führungshülse 44 ungehindert und frei drehbar ist, wie in Fig. 9 dargestellt, wobei in diesem Fall die Drehblockierkörper 54 sich nicht über die Außenmantelfläche 46 der Führungshülse 44 hinaus erstrecken.

Eine Drehung des Betätigungskörpers 52 bei in den Rückzugsaufnahmen 62 sitzenden Drehblockierkörpern 54 in einer Drehrichtung 72 entgegengesetzt zur Umlaufrichtung 64 bewirkt, dass die Drehblockierkörper 54 aus den Rückzugsaufnahmen 62 heraus bewegt werden und zunächst, wie in Fig. 7 dargestellt, in der aktiven Stellung des Betätigungskörpers 52 auf den Anfangsbereichen 68 der Druckflächen 66 aufsitzen, dabei jedoch beispielsweise in die ersten Aufnahmen 56 eintauchen und damit die freie Drehbarkeit des Schwenklagerkörpers 14 relativ zum Führungskörper 40 unterbinden.

Wird der Betätigungskörper 52 in der Drehrichtung 72 entgegengesetzt zur Umlaufrichtung 64 weitergedreht, so wirken immer weiter radial gegenüber der Schwenkachse 22 außenliegenden Bereiche der Druckflächen 66 auf die Drehblockierkörper 54 und drücken somit die Drehblockierkörper 54 zunehmend in der Arbeitsstellung A des Kugelhalses 10 in die ersten Aufnahmen 60a, 60b und 60c hinein, um somit eine im Wesentlichen spielfreie Fixierung des Schwenklagerkörpers 14 relativ zum Führungskörper 40, in diesem Fall zur Führungshülse 44, zu erreichen.

In der Drehblockierstellung der Drehblockierkörper 54 steht der Betätigungskörper 52 in seiner aktiven Stellung so, dass die Drehblockierkörper 54, wie in Fig. 7 dargestellt, ungefähr auf Mittelbereichen 76, die zwischen den Anfangsbereichen 68 und den Endbereichen 70 liegen, der Druckflächen 66 aufsitzen und von diesen beaufschlagt werden.

Die spielfreie Verriegelung des Schwenklagerkörpers 14 durch die Drehblockierkörper 54 lässt sich besonders günstig dann erreichen, wenn die Drehblockierkörper 54 und die Aufnahmen 60 so gestaltet sind, dass diese bei zunehmendem Eintauchen eines der Drehblockierkörper 54 in eine der Aufnahmen 60 und Anliegen der Drehblockierkörper 54 an einer Seite der Aufnahmen 60 eine Verdrehung des Schwenklagerkörpers 14 bewirken und der Satz von Drehblockierkörpern 54a bis 54c zur spielfreien Fixierung des Schwenklagerkörpers 14 mit in entgegengesetzten Richtungen wirkenden Drehmomenten 90, 92 auf die Aufnahmen 60 einwirkt (Fig. 7).

Um dem Betätigungskörper 52 die Möglichkeit zu eröffnen, jeweils jeden der drei Drehblockierkörper 54 optimal zu beaufschlagen, ist vorgesehen, dass in der aktiven Stellung eine Zentrierung des Betätigungskörpers 52 entsprechend der Lage der Drehblockierkörper 54 erfolgt. Insbesondere ist der Betätigungskörper 52 an einer Führungswelle 100 gelagert, wobei sich der Betätigungskörper 52 aufgrund des durch einen Zwischenraum geschaffenen Spiels relativ zur Führungswelle 100 entsprechend der durch Fertigungstoleranzen bedingten Lage der Drehblockierkörper 54 innerhalb des Führungskörpers 40 selbst zentrieren kann, wobei die Selbstzentrierung des Betätigungskörpers 52 geringfügig von einer koaxialen Anordnung zur Führungswelle 100 und somit zur geometrischen Schwenkachse 22 abweichen kann.

Aufgrund der Selbstzentrierung wirken die Drehblockierkörper 54a, 54b und 54c in der jeweiligen Führungsrichtung 58a, 58b und 58c mit ungefähr gleich großen Kräften auf die Aufnahmen 60a, 60b und 60c, so dass auch die auf den Betätigungskörper 52 wirkenden Reaktionskräfte ungefähr gleich groß sind.

Bei dem dargestellten Ausführungsbeispiel der erfindungsgemäßen Lösung sind die Drehblockierkörper 54 in den Führungsaufnahmen 56 in gleichen Winkelabständen um die Schwenkachse 22 herum angeordnet, so dass die durch die Selbstzentrierung ungefähr gleich großen Reaktionskräfte auf einen der Drehblockierkörper 54a, 54b, 54c sich zu gleichen Teilen auf die anderen Drehblockierkörper 54b und 54c, 54a und 54c sowie 54a und 54b auswirken und sich somit insgesamt aufheben, so dass der Betätigungskörper 52 im Kräftegleichgewicht steht und keine zusätzliche Abstützung benötigt.

Vorzugsweise sind die Drehblockierkörper 54, als Kugeln, ausgebildet, die somit einerseits an den Betätigungskörper 52 und andererseits auch an den Aufnahmen 60 anliegen.

Die Führungswelle 100 vermittelt somit nur eine spielbehaftete drehbare Lagerung des Betätigungskörpers 52 relativ zur Schwenkachse 22, die primär dann relevant ist, wenn der Betätigungskörper 52 die Drehblockierkörper 54 in einer Lösestellung hält in welcher die Drehblockierkörper 54 in die Rückzugsaufnahmen 62 des Betätigungskörpers 52 eintauchen.

Um den Betätigungskörper 52 zu veranlassen, sich ohne äußere Einwirkung stets in der Drehrichtung 72 so zu bewegen, wobei sich die Drehblockierkörper 54 in Richtung der Drehblockierstellung bewegen, ist der Betätigungskörper 52 durch eine Drehfeder 102 beaufschlagt, die einerseits auf den Betätigungskörper 52 wirkt und andererseits an dem Führungskörper 40 abgestützt ist.

Die Drehfeder 102 bewirkt auch, dass der Betätigungskörper 52 die Drehblockierkörper 54 kraftbeaufschlagt in die Aufnahmen 60 drückt und somit wird der Schwenklagerkörper 14 spielfrei fixiert, wobei die Spielfreiheit auch bei sich aufgrund der Belastungen im Betrieb verändernden Geometrie der Aufnahmen 60 durch ein Weiterdrehen des Betätigungskörpers 52 in der Drehrichtung 72 aufrechterhalten wird.

Die Führungshülse 44 erstreckt sich mit einem eine Aufnahme 102 für den Betätigungskörper 52 bildenden Abschnitt zwischen dem Flansch 42 und einem die Führungshülse 44 verschließenden Deckel 104, welcher vorzugsweise einstückig an die Führungshülse 44 angeformt ist und die Aufnahme 102 für den Betätigungskörper 52 begrenzt, so dass der Betätigungskörper 52 radial zur Schwenkachse 22 durch die Aufnahme 102 der Führungshülse 44 geführt ist und axial in Richtung der Schwenkachse 22 durch Anlage an einer Innenseite 108 des Deckels 104 geführt ist.

Der Deckel 104 weist ferner noch eine Bohrung 106 zur Aufnahme der Führungswelle 100 auf, die den Deckel 104 durchsetzt.

Auf einer dem Deckel 104 gegenüberliegenden Seite der Aufnahme 102 für den Betätigungskörper 52 bildet die Führungshülse 44, beispielsweise mit einem den Flansch 42 durchsetzenden Abschnitt, eine Drehfederaufnahme 112, in welcher im Anschluss an den Betätigungskörper 52 eine Drehfeder 114 angeordnet ist, die einerseits mit einem äußeren Ende in der Drehfederaufnahme 112 fixiert ist und mit einem inneren Ende mit einer Antriebshülse 122 verbunden ist, welche drehfest mit dem Betätigungskörper 52 gekoppelt ist.

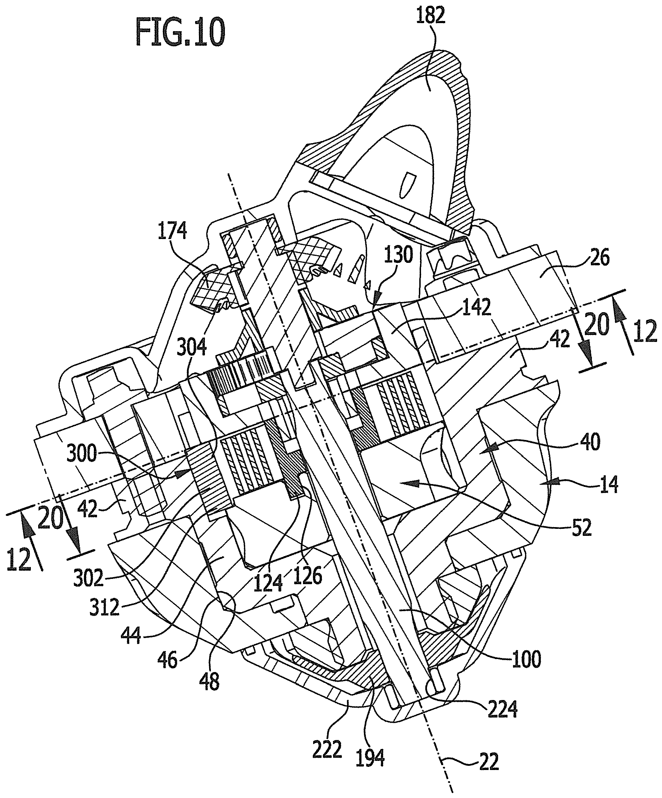

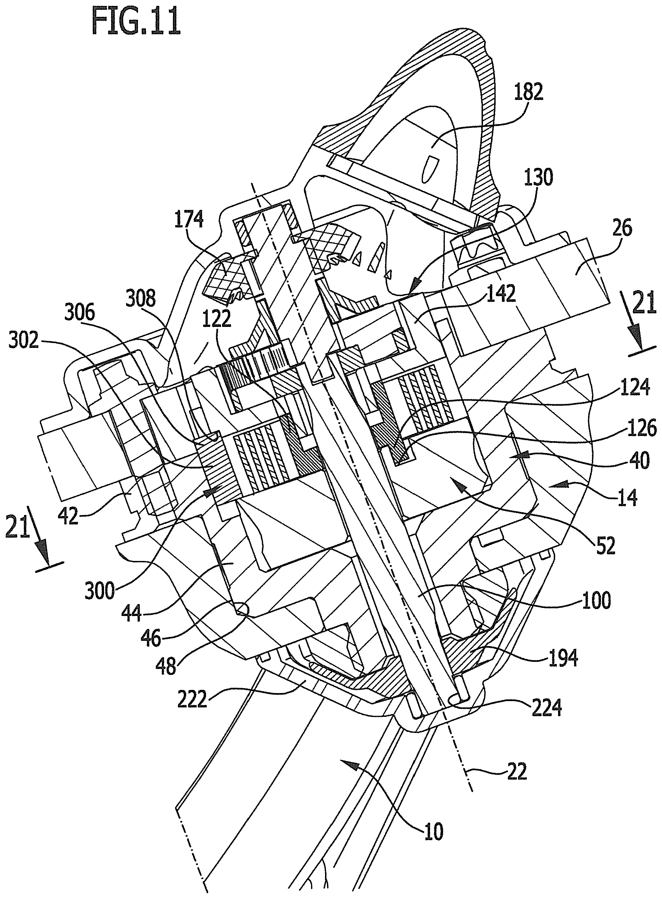

Hierzu ist die Antriebshülse 122, wie in den Fig. 10 und 11 dargestellt, beispielsweise mit Fortsätzen 124 versehen, die in entsprechende Ausnehmungen 126 in den Betätigungskörper 52 eingreifen.

Dadurch, dass die Drehfeder 114 auf die Antriebshülse 122 wirkt, die drehfest mit dem Betätigungskörper 52 gekoppelt ist, erfolgt durch das Einwirken der Drehfeder 114 auf die Antriebshülse 122 ein Antrieb des Betätigungskörpers in der Drehrichtung 72, so dass der Betätigungskörper 52 bei ungehinderter Einwirkung der Drehfeder 114 auf die Antriebshülse 122 den Betätigungskörper 52 stets so beaufschlagt, dass dieser die Tendenz hat die Drehblockierkörper 54 kraftbeaufschlagt in die Aufnahmen 60 zu drücken und somit den Schwenklagerkörper 14 relativ zur Führungshülse 44 drehfest und insbesondere spielfrei zu fixieren.

Um die Drehblockierkörper 54 in die Lösestellung bewegen zu können, ist eine Einwirkung auf den Betätigungskörper 52 entgegengesetzt zur Drehrichtung 72 und auch somit entgegengesetzt zur Wirkung der Drehfeder 114 erforderlich.

Hierzu ist die Antriebshülse 122 durch ein als Ganzes mit 130 bezeichnetes Planetengetriebe 130 antreibbar, welches in einer Getriebeaufnahme 132 der Führungshülse 44, insbesondere koaxial zur Schwenkachse 22, angeordnet ist, welche beispielsweise innerhalb eines Durchbruchs 134 der Trägerplatte 26 angeordnet ist und vorzugsweise ausgehend von dem Flansch 42 in Richtung des Durchbruchs 134 der Trägerplatte übersteht.

Das Planetengetriebe 130 umfasst seinerseits ein Hohlrad 142, welches in der Getriebeaufnahme 132 geführt ist und mit einer Innenverzahnung 144 versehen ist, mit welcher Planetenräder 146 mit ihrer Außenverzahnung 148 in Eingriff stehen.

Dabei sind die Planetenräder 146 drehbar an einem Planetenradträger 152 gehalten, der seinerseits drehfest mit der Führungswelle 100 verbunden ist, so dass der Planetenradträger 152 einen Abtrieb des Planetengetriebes 130 zum Ausführen des Verschwenkens des Kugelhalses bildet.

Ferner umfasst das Hohlrad 142 einen zwischen dem Planetenradträger 152 und der Drehfeder 114 liegenden Flanschkörper 154, welcher sich ebenfalls in Richtung der Führungswelle 100 erstreckt, diese umschließt, jedoch relativ zu dieser drehbar ist und einen Abtrieb des Planetengetriebes 130 zum Betätigen der Drehblockiereinrichtung 50 darstellt.

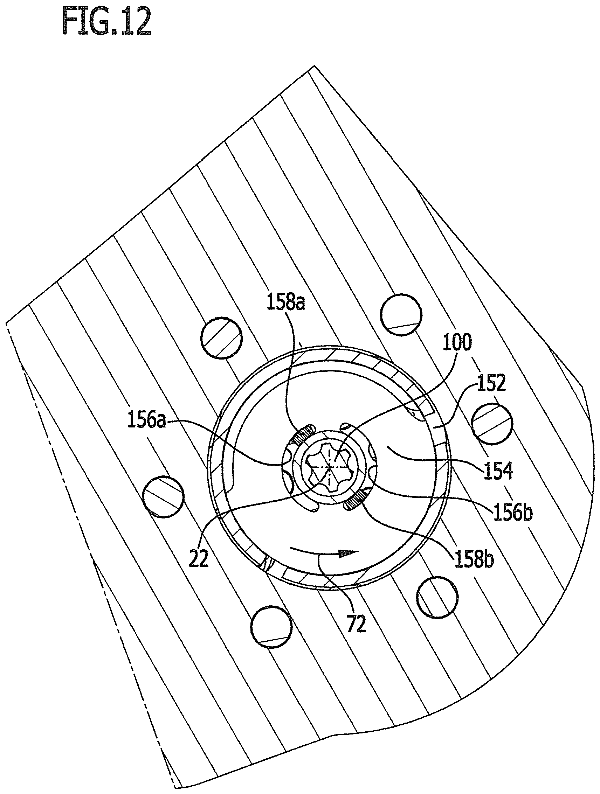

Wie in Fig. 12 dargestellt, weist der Flanschkörper 154 um die Schwenkachse 22 umlaufend angeordnete kreisbogenförmige Antriebsschlitze 156a, 156b auf, welche mit in diese eingreifenden Antriebsfingern 158a, 158b der Antriebshülse 122 zusammenwirken, und welche allerdings so gestaltet sind, dass durch die Differenz zwischen dem Winkelbereich um die Schwenkachse 22, über welchen sich die Antriebsschlitze 156 erstrecken, und dem Winkelbereich um die Schwenkachse 22, über welchen sich die Antriebsfinger 158 erstrecken, ein Freigang der Antriebshülse 122 relativ zum Hohlrad 142 möglich ist, der nachfolgend noch im Einzelnen erläutert wird.

Die Planetenräder 146 sind ferner mit ihrer Außenverzahnung 148 in Eingriff mit einer Außenverzahnung 164 eines Sonnenrades 162 des Planetengetriebes 130, das auf einer als Ganzes mit 166 bezeichneten Antriebswelle sitzt, die koaxial zur Schwenkachse 22 angeordnet ist und beispielsweise mittels eines endseitigen Wellenstummels 168, der in eine stirnseitige Bohrung 172 der Führungswelle 100 eingreift, relativ zur Führungswelle 100 frei drehbar, jedoch koaxial zu dieser gelagert ist.

Die Antriebswelle 166 trägt im Abstand von dem Planetengetriebe 130 ein Antriebszahnrad 174, beispielsweise ein Kegelzahnrad, welches mit einem Abtriebszahnrad 176 einer motorischen Antriebseinheit 182 in Eingriff ist, die beispielsweise einerseits einen Antriebsmotor, vorzugsweise einen Elektromotor, und andererseits ein Untersetzungsgetriebe zum Antreiben des Antriebszahnrads 174 umfasst.

Die Antriebseinheit 182 ist beispielsweise an einem Abdeckkörper 184 gehalten, welcher ausgehend von der Trägerplatte 126 die Antriebswelle 166 mit dem Antriebszahnrad 174 sowie das mit diesem kämmende Abtriebszahnrad 176 übergreift und außerdem noch die Antriebswelle 166 auf einer dem Wellenstummel 168 abgewandten Seite lagert.

Somit bilden das Planetengetriebe 130 und die Antriebseinheit 182 beispielsweise unter anderem eine Betätigungseinrichtung 180 für die Drehblockiereinrichtung 50.

Die mit dem Planetenradträger 152 drehfest gekoppelte Führungswelle 100 durchsetzt - wie bereits beschrieben - den Deckel 104 des Führungskörpers 40 und ist an einem über den Deckel 104 überstehenden Ende 192 drehfest mit einem Antriebskörper 194 gekoppelt, welcher zwei Antriebsarme 196a und 196b aufweist, die sich in Richtung eines Endflansches 198 des Schwenklagerkörpers 14 erstrecken, welcher einen äußeren Teilbereich des Deckels 104 des Führungskörpers 40 übergreift.

Der Endflansch 198 übergreift dabei den Deckel 104 des Führungskörpers 40 in einem außenliegenden Bereich und erstreckt sich bis zu einem Führungsansatz 202 des Deckels 104, wobei der Endflansch 198 beispielsweise mit einer radial innen liegenden Zylinderfläche 204 eine äußere Zylinderfläche 206 des Führungsansatzes 202 umgreift und beispielsweise an dieser anliegt und dadurch ebenfalls noch zusätzlich am Führungsansatz 202 geführt ist.

Darüber hinaus erstreckt sich in Fortsetzung des Führungsansatzes 202 eine einstückig an den Führungsansatz 202 angeformte Gewindehülse 212, auf welche ein Haltering 214 aufgesetzt und fixiert, insbesondere aufgeschraubt, ist, der den Endflansch 198 partiell in einem radial innenliegenden Bereich übergreift, so dass der Endflansch 198 des Schwenklagerkörpers 14 axial unverschiebbar zwischen dem Deckel 104 und dem auf die Gewindehülse 212 aufgesetzten Haltering 214 und somit relativ zum Führungskörper 40 axial unverschiebbar geführt ist.

Auf dem Endflansch 198 ist ferner eine Abdeckung 222 drehfest montiert, welche den Antriebskörper 194 mit den Antriebsarmen 196 übergreift und eine Lageraufnahme 224 für das Ende 192 der Führungswelle 100 bildet, so dass die Abdeckung 222 mit dem Schwenklagerkörper 14 eine Einheit bildet, die um die Schwenkachse 22 drehbar ist.

Die Abdeckung 222 sitzt dabei mit Anlagekörpern 226a und 226b sowie 228a und 228b auf dem Endflansch 198 auf, wobei die Anlagekörper 226a, 226b sowie 228a und 228b so angeordnet sind, dass die Antriebsarme 196a und 196b mit ihren Enden 232a, 232b zwischen die Anlagekörper 226a und 228a bzw. 226b und 228b eingreifen, dabei jedoch zwischen den Anlagekörpern 226a und 228a bzw. 226b und 228b begrenzt mit einem definierten Freigang drehbar sind.

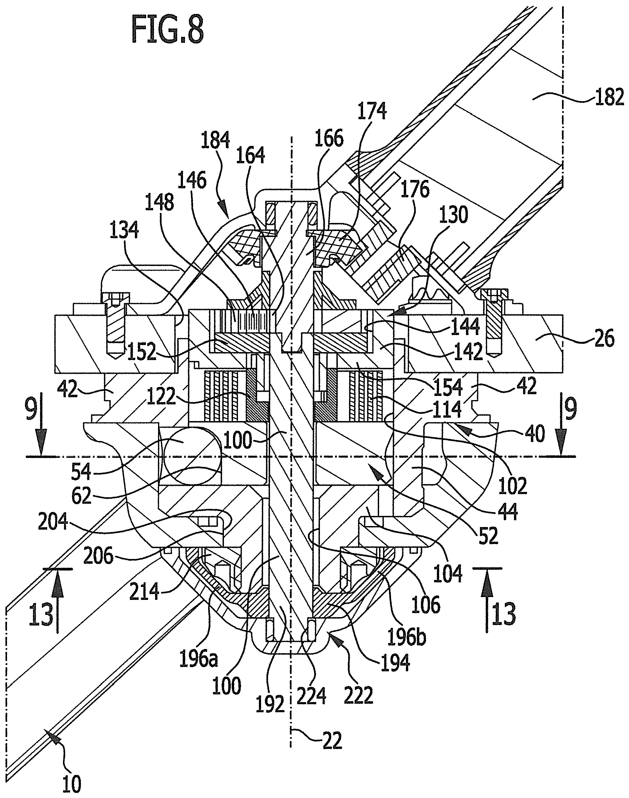

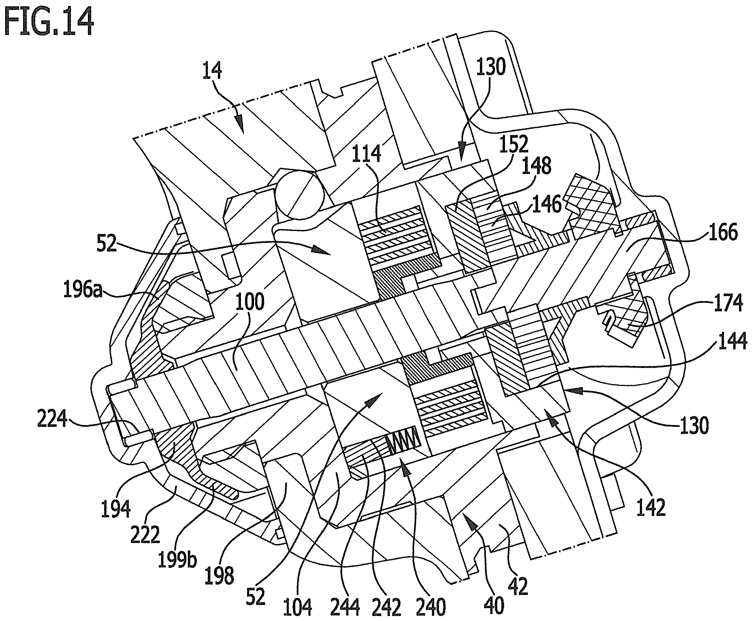

Zur Festlegung des Betätigungskörpers 52 in der Lösestellung ist eine in den Figuren 14 bis 16 dargestellte Lösestellungsrasteinrichtung 240 vorgesehen, welche beispielsweise einen in einer Bohrung 242 in dem Betätigungskörper 52 angeordneten und in einer zur Bohrung 242 parallelen Rastrichtung bewegbaren Rastkörper 244 umfasst, welcher beaufschlagt durch eine Federeinheit 246 in Richtung einer Raststellung beaufschlagt ist und welcher somit von einer Rastlösestellung in die Raststellung übergehen und in eine als Rastbohrung ausgebildete Rastaufnahme 252 im Deckel 104 eingreifen kann, wenn der Betätigungskörper 52 in der beispielsweise in den Fig. 8 und 9 dargestellten Lösestellung steht.

Das heißt, dass die Feder 246 den Rastkörper 244 in Richtung des Deckels 104 beaufschlagt, wobei der Rastkörper 244 so lange keine Rastwirkung entfaltet, als er außerhalb der Rastaufnahme 252 beim Bewegen des Betätigungskörpers 52 an der Innenseite 108 des Deckels 104 entlanggleitet.

Erst wenn die Relativdrehung des Betätigungskörpers 52 zum Deckel 104 soweit fortgeschritten ist, dass dieser in der Lösestellung steht, greift der Rastkörper 244 in die Rastaufnahme 252 ein und legt somit den Betätigungskörper 52 in der Lösestellung fest, so dass dieser trotz Wirkung der Drehfeder 114 sich nicht in die Drehblockierstellung, dargestellt in den Fig. 6 und 7, zurückbewegen kann.

Um den Rastkörper 244 wieder aus seiner in die Rastbohrung 252 eingreifenden Raststellung heraus und in die Rastlösestellung bewegen zu können, ist in der Rastaufnahme 252 ein Tastkörper 254 angeordnet, welcher mit einem Tastkopf 256 eine dem Deckel 104 zugewandte Flanschseite 258 des Endflansches 198 abtastet, wobei die Flanschseite 258 eine Vertiefung 262 aufweist, in welche der Tastkopf 256 des Tastkörpers 254 dann eingreift, wenn dieser ein Verrasten des Rastkörpers 244 mit der Rastbohrung 252 zulassen soll.

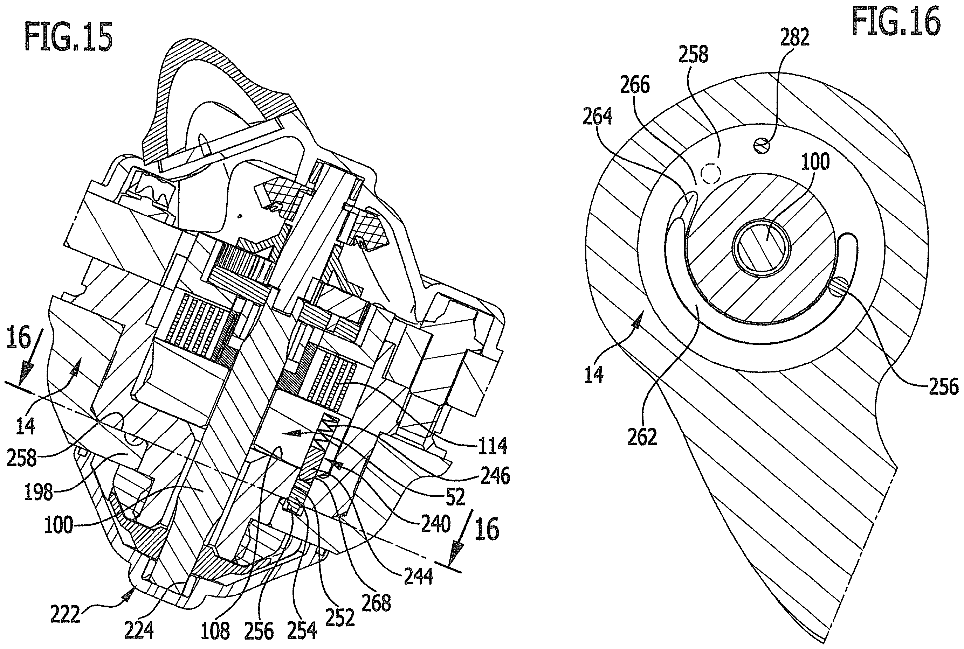

Diese Stellung ist beispielsweise in Fig. 16 durchgezogen gezeichnet dargestellt.

Um jedoch die Verrastung lösen und den Rastkörper 244 von Raststellung in die Rastlösestellung bewegen zu können, und zwar unmittelbar vor Erreichen der Arbeitsstellung oder bei Erreichen der Arbeitsstellung, geht die Vertiefung 262 mit einer Rampe 264 in eine gegenüber der Vertiefung 262 erhöhte Rastlösefläche 266 über, wobei die Rampe 264 den Tastkopf 256 des Tastkörpers 254 ausgehend von der Vertiefung 262 zunehmend in Richtung des Rastkörpers 244 beaufschlagt und somit der Tastkörper 254 zunehmend den Rastkörper 244 aus der Rastaufnahme 52 heraus in Richtung des Betätigungskörpers 252 verschiebt, wobei dann, wenn der Tastkopf 256 die Rastlösefläche 266 erreicht hat, wie in Fig. 16 gestrichelt dargestellt, der Tastkörper 254 soweit in Richtung des Betätigungskörpers verschoben ist, dass dessen dem Tastkopf 256 gegenüberliegende Endfläche 268 mit der Innenseite 108 des Deckels 104 fluchtet.

Somit ist die Verrastung des Betätigungskörpers 52 in der Lösestellung mittels des Rastkörpers 244 bei Erreichen der Arbeitsstellung A gelöst, so dass dann der Betätigungskörper 52 aufgrund der Kraftwirkung der Drehfeder 114 sich in die Drehblockierstellung verdreht und damit den Schwenklagerkörper 14 in dieser Stellung relativ zum Führungskörper 40 drehfest festlegt.

Die Lage der den Rastkörper 244 führenden Bohrung 242, sowie der Rastaufnahme 252 und die Lage der Rastlösefläche 266 sind so gewählt, dass unmittelbar vor Erreichen der Arbeitsstellung A der Tastkopf 256 des Tastkörpers 254 die Rastlösefläche 266 erreicht und somit der Tastkörper 254 den Rastkörper 244 aus der Rastaufnahme 252 herausbewegt und dadurch die Verrastung des Betätigungskörpers 52 in seiner Lösestellung unmittelbar vor Erreichen oder spätestens bei Erreichen der Arbeitsstellung löst, so dass dann auch in der Arbeitsstellung A die Drehblockierkörper 54 in die Aufnahmen 60, die in dieser Stellung mit den Führungsaufnahmen 56 fluchtend angeordnet sind, eingreifen und den Schwenklagerkörper 14 drehfest relativ zum Führungskörper 40 festlegen können.

Bei der vorstehend beschriebenen Lösung ist nur ein Satz von Aufnahmen 60 für die drehfeste Festlegung des Schwenklagerkörpers 14 in der Arbeitsstellung A vorgesehen, während in der Ruhestellung R eine Festlegung des Schwenklagerkörpers 14 durch die Drehblockiereinrichtung 50 nicht vorgesehen ist.

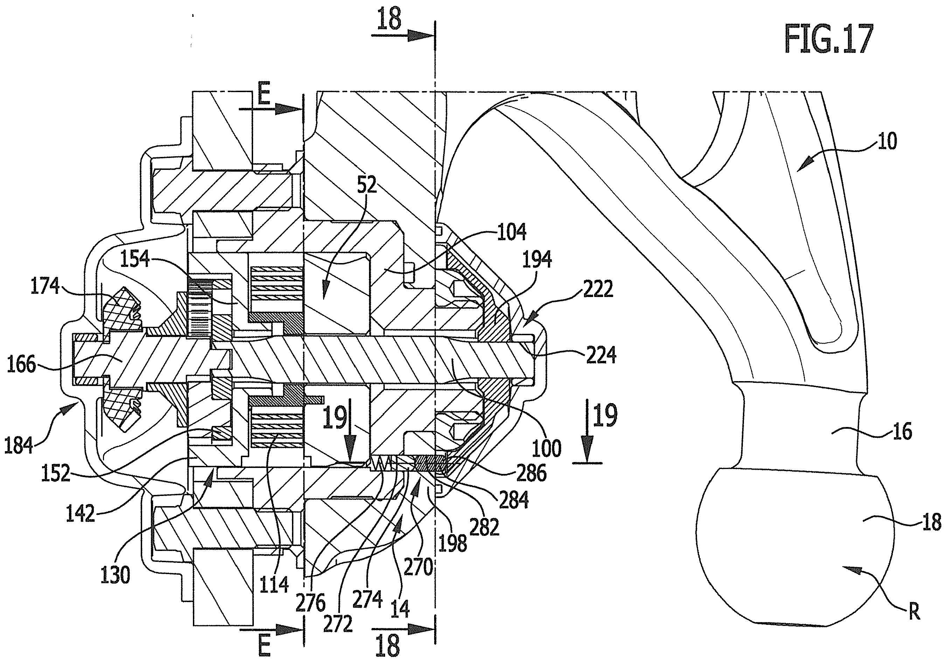

Vielmehr ist zur Festlegung des Schwenklagerkörpers 14 in der Ruhestellung wie in Fig. 17 dargestellt eine Ruhestellungsrasteinrichtung 270 vorgesehen, welche einen in dem Deckel 104 in einer Bohrung 272 vorgesehenen Rastkörper 274 aufweist, welcher durch ein beispielsweise in der Bohrung 272 angeordnetes Federelement 276 in Richtung einer zu der Bohrung 272 parallelen Rastrichtung und in Richtung des Endflansches 198 kraftbeaufschlagt ist und in eine als Rastbohrung ausgebildete Restaufnahme 282 in dem Endflansch 198 dann eingreift, wenn der Schwenklagerkörper 14 in der Ruhestellung steht. Hierzu beaufschlagt das Federelement 276 den Rastkörper 274 ständig in Richtung der dem Deckel 104 zugewandten Flanschseite 258 des Endflansches 198, wobei ein Eingreifen des Rastkörpers 274 in die Rastaufnahme 282 nur dann möglich ist, wenn der Schwenklagerkörper 14 die der Ruhestellung R entsprechende Drehstellung relativ zum Führungskörper 40 erreicht hat.

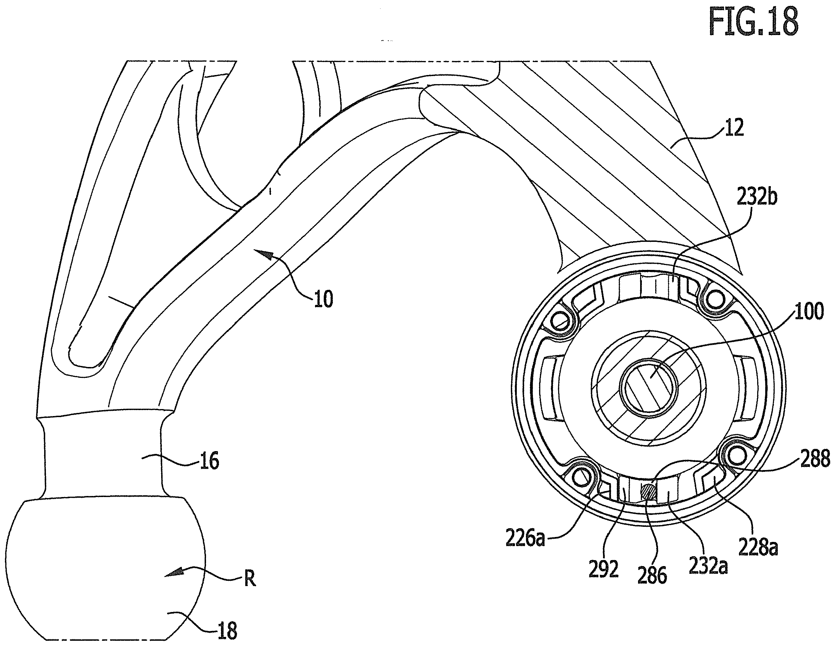

Zum Lösen der Verrastung ist in der Rastaufnahme 282 ein Tastkörper 284 vorgesehen, welcher mit einem Tastkopf 286 über den Endflansch 198 in Richtung eines der Enden 232 eines der Antriebsarme 196 übersteht, wie in Fig. 18 dargestellt.

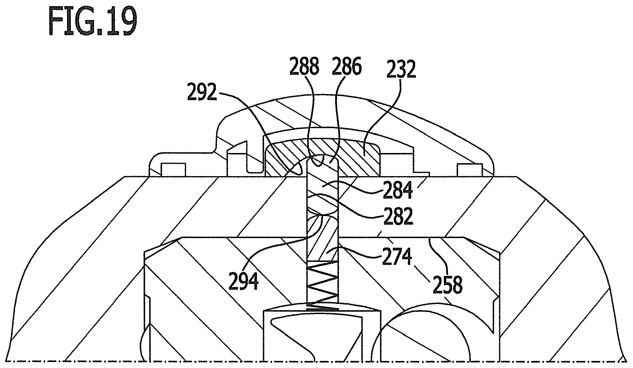

Dabei kann, wie in Fig. 18 und Fig. 19 dargestellt, der Tastkopf 286 nur dann in eine Vertiefung 288 in einem der Enden 232 eingreifen, wenn, wie in Fig. 18 dargestellt, das Ende 232a an dem Anlagekörper 226a anliegt, was dann der Fall ist, wenn mit dem Ende 232a durch Einwirken auf den Anlagekörper 226a der Schwenklagerkörper 14 und somit der Kugelhals 10 in die Ruhestellung bewegt wurden.

Die Vertiefung 288 ist ferner mit einer Rampe 292 versehen, welche dann wirksam wird, wenn das Ende 232a des Antriebsarms 196a sich von dem Anlagekörper 226a in Richtung des Anlagekörpers 228a bewegt.

In diesem Fall wirkt die Rampe 292 derart auf den Tastkopf 286, dass der Tastkörper 284 soweit in die Rastaufnahme 282 eingeschoben wird, bis dieser den Rastkörper 274 aus seiner Ruhestellungsraststellung in der Rastbohrung 282 herausgeschoben und in eine Freigabestellung bewegt hat, wobei eine dem Tastkopf 286 gegenüberliegende Endfläche 294 des Tastkörpers 284 bündig mit der Flanschseite 258 abschließt, so dass der Rastkörper 274 den Schwenklagerkörper 14 mit dem Endflansch 198 nicht mehr relativ zum Deckel 104 festlegen kann, sondern der Rastkörper 274 in seiner Freigabestellung steht und eine freie Drehbarkeit des Endflansches 198 mit dem Schwenklagerkörper 14 relativ zum Führungskörper 40, insbesondere zum Deckel 104 desselben zulässt.

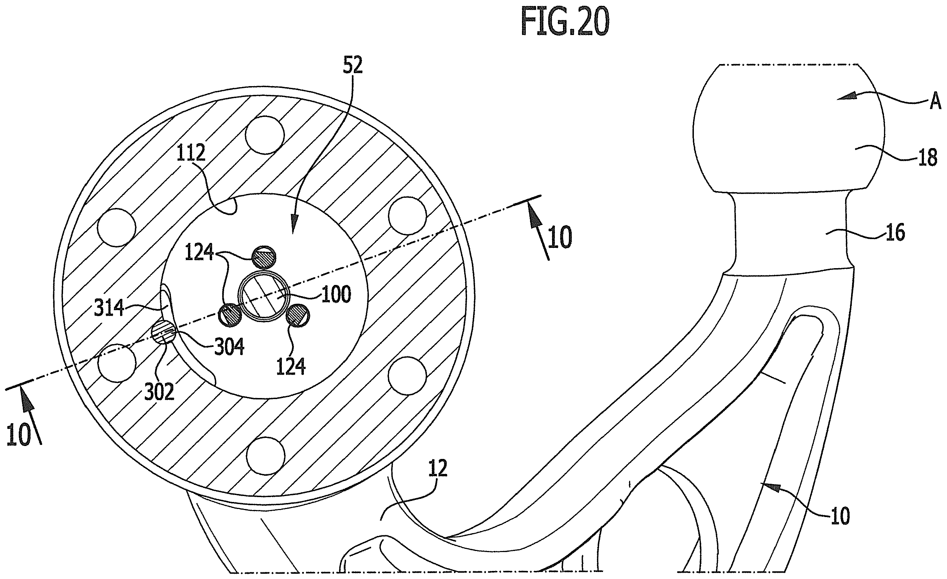

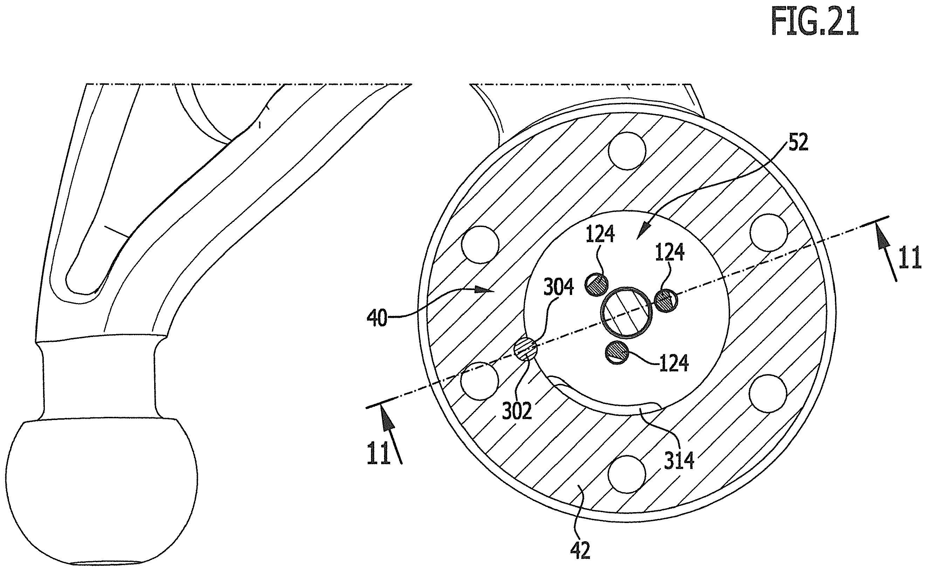

Zur Sicherung des Betätigungskörpers 52 gegen eine unerwünschte Verdrehung in die Lösestellung ist, wie in den Fig. 10 und 11 sowie 20 und 21 dargestellt, in dem Führungskörper 40, insbesondere im Bereich der Drehfederaufnahme 112, eine Sicherungseinrichtung 300 vorgesehen, welche einen Sicherungskörper 302 aufweist, der gemäß Fig. 20 und 21 in dem Führungskörper 40, insbesondere im Bereich der Drehfederaufnahme 112, über mehr als eine halbe Umfangseite geführt ist und mit einem Sicherungskörpersegment 304 in die Drehfederaufnahme 112 hineinragt, dabei jedoch nicht in Wechselwirkung mit der Drehfeder 114 tritt.

Vielmehr erstreckt sich der Sicherungskörper 302 derart zwischen dem Hohlrad 142 des Planetengetriebes 130 und dem Betätigungskörper 52, dass der Sicherungskörper 302 mit dem radial in die Drehfederaufnahme 112 hineinragenden Sicherungskörpersegment 304 entweder in einer Entsicherungsstellung mit einem Ende 306 in eine Ausnehmung 308 des Hohlrads 142 eingreift, wie in Fig. 11 dargestellt, oder in einer Sicherungsstellung mit einem Ende 312 in eine Ausnehmung 314 in dem Betätigungskörper 52 eingreift, wie in Fig. 10 und Fig. 20 dargestellt.

Sobald der Sicherungskörper 302 in seiner Sicherungsstellung mit dem Ende 312 in die Ausnehmung 314 des Betätigungskörpers 52 eingreift, wie in Fig. 20 dargestellt, ist dieser nicht mehr soweit verdrehbar, dass die Lösestellung erreichbar ist.

Vielmehr bleibt in dieser Sicherungsstellung des Sicherungskörpers 302, die beispielsweise in Fig. 20 dargestellt ist, der Drehblockierkörper in seiner Drehblockierstellung.

Um die in Fig. 11 und Fig. 21 dargestellte Lösestellung des Drehblockierkörpers 52 zu erreichen, ist es erforderlich, den Sicherungskörper 302 so zu verschieben, dass dieser, wie in Fig. 21 dargestellt, außer Eingriff mit der Ausnehmung 314 in dem Betätigungskörper 52 kommt. Dies ist dann möglich, wenn der Sicherungskörper 302 in der Lage ist, in die Ausnehmung 308 des Hohlrades 142 einzugreifen, wie in Fig. 11 und 21 dargestellt.

Die Ausnehmung 308 ist dabei so angeordnet, dass ein Eingriff des Sicherungskörpers 302 mit dem Ende 306 in die Ausnehmung 308 nur dann möglich ist, wenn das Hohlrad 142 unter Ausnutzung des Freigangs durch die Antriebsschlitze 156 und die Antriebsfinger verdreht ist, ohne dass dieses den Betätigungskörper 52 verdreht hat, so dass nachfolgend der Betätigungskörper 52 aus der Drehblockierstellung durch Weiterdrehen des Hohlrads 142 unter drehender Einwirkung auf die Antriebshülse 122 aus der Drehblockierstellung herausbewegt werden kann.

Die erfindungsgemäße Anhängekupplung funktioniert nun folgendermaßen.

Ausgehend von der Arbeitsstellung, dargestellt in den Fig. 1, 2, 3 und 6 sowie 7, in welcher der Schwenklagerkörper 14 relativ zum Führungskörper 40 in Bezug auf eine Drehbewegung um die Schwenkachse 22 drehblockiert ist, nämlich dadurch, dass der Betätigungskörper 52 die Drehblockierkörper 54 in der Führungsrichtung 58 radial soweit von der Schwenkachse 22 weg nach außen bewegt hat, dass diese in die Aufnahmen 60 eingreifen und dadurch den Schwenklagerkörper 14 relativ zum Führungskörper 40 drehblockiert fixieren, bewirkt ein Einschalten der Antriebseinheit 182, dass mit dem Abtriebszahnrad 176 das Antriebszahnrad 174 derart angetrieben wird, dass die Antriebswelle 166 das Sonnenrad 162 antreibt.

Dieses treibt wiederum die Planetenräder 146 an, die jedoch dadurch, dass der Schwenklagerkörper 14 hinsichtlich einer Drehbewegung um die Schwenkachse 22 durch die Drehblockiereinrichtung 50 blockiert ist, ebenfalls blockiert sind, so dass sich die Antriebsarme 196 des Antriebskörpers 194 relativ zu den Anlagekörpern 226 und 228 nicht verdrehen können, und folglich auch eine Drehbewegung der Führungswelle 100, mit welcher der Planetenradträger 152 drehfest verbunden ist, nicht erfolgen kann.

Dadurch erfolgt ein Antrieb des Hohlrades 142, wobei dieses sich so weit verdreht, bis der Sicherungskörper 302 in die Ausnehmung 308 des Hohlrades 142 eingreifen kann und von der Sicherungsstellung in die Entsicherungsstellung übergehen kann und dann über die Antriebsschlitze 156 und die Antriebsfinger 158 die Antriebshülse 122 verdreht, die über die Fortsätze 124 mit dem Betätigungskörper 52 drehfest verbunden ist.

Dadurch wird durch das Hohlrad 142 der Betätigungskörper 52 aus der Drehblockierstellung heraus in Richtung seiner Lösestellung verdreht, und zwar so weit bis die Lösestellung erreicht ist und die Lösestellungsrasteinrichtung 240 des Betätigungskörpers 52 wirksam wird und diesen in der Lösestellung relativ zum Führungskörper 40 in der beschriebenen Art und Weise verrastet, wie dies in Fig. 15 dargestellt ist.

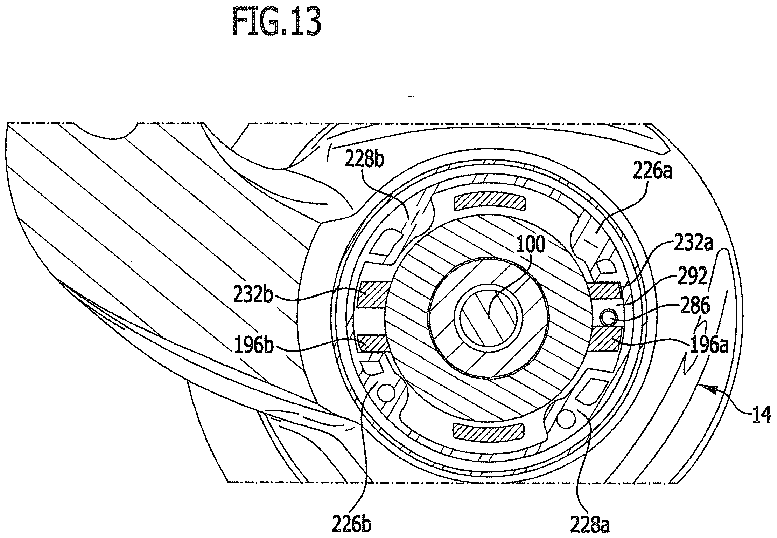

Da bei Erreichen der Lösestellung nunmehr eine Drehbewegung des Schwenklagerkörpers 14 möglich ist und außerdem die Drehbewegung des Betätigungskörpers 52 entgegengesetzt zur Drehrichtung 72 durch die Lösestellungsrasteinrichtung 240 blockiert ist, bleibt das Hohlrad 142 stehen, während sich nunmehr der Planetenradträger 146 dreht, der über die Führungswelle 100 und den Antriebskörper 194 mit den Antriebsarmen 196 in der Lage ist, den Schwenklagerkörper 14 um die Schwenkachse 22 in Richtung der Ruhestellung R zu verschwenken, wobei in diesem Fall die Antriebsarme 196 mit den Enden 232 an den Anlagekörpern 226 anliegen, wie dies in Fig. 13 dargestellt ist.

Bei Erreichen der Ruhestellung R wird die Ruhestellungsrastvorrichtung 270 aktiv, nämlich dadurch, dass der Rastkörper 274 in der Lage ist, in die Rastbohrung 282 einzugreifen und den Tastkörper in Richtung der Vertiefung 288 zu verschieben und in die Enden 232 der Antriebsarme 196 eintreten zu lassen.

Damit erfolgt eine Verrastung des Schwenklagerkörpers 14 in der Ruhestellung R des Kugelhalses 10 entsprechenden Drehstellung durch die Ruhestellungsrastvorrichtung 270.

In dieser Ruhestellung erfolgt nun ein Abschalten der Antriebseinheit 182.

Soll nun ein Zurückschwenken des Kugelhalses 10 von der Ruhestellung R in die Arbeitsstellung A erfolgen, so wird die Antriebseinheit 182 mit umgekehrter Drehrichtung betrieben.

Da eine Verdrehung des Betätigungskörpers 52 aufgrund der wirksamen Lösestellungsrasteinrichtung nicht möglich ist, erfolgt eine Drehbewegung des Planetenradträgers 152 der über die Führungswelle 100 den Antriebskörper 194 mit den Antriebsarmen 196 antreibt und die Enden 232 in Richtung der Anlagekörper 228 verdreht, wie dies beispielsweise sich aus Fig. 13 ergibt.

Dies führt dazu, dass die Rampe 292 wirksam wird, welche auf den Tastkopf 286 des Tastkörpers 284 einwirkt und in der beschriebenen Art und Weise zu einem Lösen der Ruhestellungsrastvorrichtung 270, d.h. einem Übergang von der Ruhestellungsraststellung in die Freigabestellung, führt, so dass durch weiteres Einwirken der Enden 232 der Antriebsarme 196 auf die Anlagekörper 228 ein Verschwenken des Schwenklagerkörpers 14 mit Verschwenken des Kugelhalses 10 in Richtung der Arbeitsstellung A erfolgt.

Unmittelbar vor Erreichen der Arbeitsstellung A erfolgt in der beschriebenen Art und Weise, wie beispielsweise in Fig. 14 bis 16 dargestellt, ein Lösen der Lösestellungsrasteinrichtung 240, d.h. ein Übergang derselben von der Raststellung in die Rastlösestellung, und somit die Freigabe des Betätigungskörpers 52 zur Bewegung in der Drehrichtung 72 unter Einwirkung der Drehfeder 114 in Richtung der Drehblockierstellung, wobei die Drehblockierkörper 54 durch den Betätigungskörper 52 radial zur Schwenkachse 22 nach außen in die Aufnahmen 60 gedrückt werden und somit wiederum zu einer Drehblockierung des Schwenklagerkörpers 14 relativ zum Führungskörper 40 führen.

In dieser verriegelten Stellung des Schwenklagerkörpers 14 relativ zum Führungskörpers 40 ist wiederum eine Drehbewegung des Planetenradträgers 152 blockiert, so dass das Hohlrad 142 weitergedreht wird, und zwar in eine in Fig. 12 dargestellte Stellung, in welcher der Betätigungskörper 52 eine weitere Drehbewegung in der Drehrichtung 72 unter Einwirkung der Drehfeder 114 ausführen kann, so dass das Hohlrad 142 in der Arbeitsstellung ein Nachstellen durch weiterdrehen des Betätigungskörpers 52 in der Drehrichtung 72 unter Einwirkung der Drehfeder 114 nicht behindert.

## Patentansprüche

1. Anhängekupplung umfassend einen zwischen einer Arbeitsstellung (A) und einer Ruhestellung (R) bewegbaren Kugelhals (10) mit einem an einem ersten Ende (12) angeordneten Schwenklagerkörper (14) und einer an einem zweiten Ende (16) angeordneten Kupplungskugel (18), eine fahrzeugfest angeordnete Schwenklagereinheit (20), mittels welcher der Schwenklagerkörper (14) um eine Schwenkachse (22) zwischen der Arbeitsstellung (A) und der Ruhestellung (R) verschwenkbar aufgenommen ist, und eine Drehblockiereinrichtung (50) mit mindestens zwei Drehblockierkörpern (54), die mittels eines Führungskörpers (40) in einer Führungsrichtung (58) mit mindestens einer Komponente in radialer Richtung zur Schwenkachse (22) bewegbar geführt sind, wobei die Drehblockierkörper (54) in der Arbeitsstellung (A) durch Bewegung in der Führungsrichtung (58) in eine Drehblockierstellung bringbar sind und in dieser mit einer Aufnahme (60) im Schwenklagerkörper (14) in Eingriff stehen, um eine Schwenkbewegung des Schwenklagerkörpers (14) um die Schwenkachse (22) relativ zum Führungskörper (40) zu blockieren, und in eine Lösestellung bringbar sind und in dieser mit der jeweiligen Aufnahme (60) außer Eingriff stehen, und mit einem für jeden der Drehblockierkörper (54) jeweils eine quer zur Führungsrichtung (58) verlaufende Keilfläche (66) aufweisenden und um die Schwenkachse (22) drehbar angeordneten Betätigungskörper (52), durch dessen Drehbewegung in einer Betätigungsrichtung (72) die mindestens zwei Drehblockierkörper (54) in der Führungsrichtung (58) bewegbar und beaufschlagbar sind,
**dadurch gekennzeichnet, dass** eine von der Drehblockiereinrichtung (50) unabhängige Ruhestellungsrasteinrichtung (270) vorgesehen ist, welche in einer Freigabestellung eine Bewegung des Schwenklagerkörpers (14) relativ zum Führungskörper (40) zulässt und in einer Ruhestellungsraststellung den Schwenklagerkörper (14) relativ zu dem Führungskörper (40) drehfest festlegt, und zumindest in der der Ruhestellung (R) entsprechenden Drehstellung des Schwenklagerkörpers (14) aufgrund eines in dieser vorgesehenen Federelements (276) selbsttätig in die Raststellung übergeht.

2. Anhängekupplung nach Anspruch 1, **dadurch gekennzeichnet, dass** die Ruhestellungsrasteinrichtung (270) bei Erreichen der der Ruhestellung (R) entsprechenden Drehstellung des Schwenklagerkörpers (14) aufgrund eines in dieser vorgesehenen Federelements (276) selbsttätig in die Raststellung übergeht.

3. Anhängekupplung nach Anspruch 1 oder 2, **dadurch gekennzeichnet, dass** die Ruhestellungsrasteinrichtung (270) in Abhängigkeit von einem bestimmten Funktionszustand der Anhängekupplung lösbar ist, dass insbesondere die Ruhestellungsrasteinrichtung (270) zum Beginn eines Verschwenkens des Schwenklagerkörpers (14) von der Ruhestellung (R) in die Arbeitsstellung (A) lösbar ist.

4. Anhängekupplung nach Anspruch 3, **dadurch gekennzeichnet, dass** die Ruhestellungsrasteinrichtung (270) durch eine elektrisch betreibbare Antriebseinheit (182) lösbar ist.

5. Anhängekupplung nach einem der Ansprüche 3 bis 4, **dadurch gekennzeichnet, dass** eine zum Verschwenken des Kugelhalses (10) vorgesehene Antriebseinheit (182) über einen Schwenkantrieb für den Kugelhals (10) die Ruhestellungsrasteinrichtung (270) in die Freigabestellung überführt, dass insbesondere der Schwenkantrieb vor einem Verschwenken des Schwenklagerkörpers (14) die Ruhestellungsrasteinrichtung (270) in die Freigabestellung überführt.

6. Anhängekupplung nach einem der voranstehenden Ansprüche, **dadurch gekennzeichnet, dass** die Ruhestellungsrasteinrichtung (270) einen in einem der Körper (14, 40) angeordneten und in einer Rastrichtung bewegbaren Rastkörper (274) umfasst, der mit einer in einem anderen der Körper (40, 14) angeordneten Rastaufnahme (282) in Eingriff bringbar ist, dass insbesondere der in der Rastrichtung bewegbare Rastkörper (274) im Führungskörper (40) angeordnet ist und dass die Rastaufnahme (282) in dem Schwenklagerkörper (14) angeordnet ist.

7. Anhängekupplung nach Anspruch 6, **dadurch gekennzeichnet, dass** die Rastrichtung parallel zur Schwenkachse (22) verläuft.

8. Anhängekupplung nach einem der voranstehenden Ansprüche, **dadurch gekennzeichnet, dass** der Rastaufnahme (282) ein Rastlösekörper (284) zugeordnet ist, der bei Betätigung den Rastkörper (274) aus der Rastaufnahme (282) verdrängt, dass insbesondere der Rastlösekörper (284) durch einen Schwenkantrieb für den Schwenklagerkörper (14) betätigbar ist und dass insbesondere der Schwenkantrieb zum Verschwenken des Schwenklagerkörpers (14) von der Ruhestellung (R) in die Arbeitsstellung (A) zunächst mit Freigang relativ zum Schwenklagerkörper (14) bewegbar ist und dann den Schwenklagerkörper (14) zwischen der Ruhestellung (R) und der Arbeitsstellung (A) verschwenkt, dass insbesondere die Ruhestellungsrasteinrichtung (270) durch den Schwenkantrieb während des Freigangs von der Ruhestellungsraststellung in die Freigabestellung überführt wird.

9. Anhängekupplung nach einem der voranstehenden Ansprüche, **dadurch gekennzeichnet, dass** eine Lösestellungsrasteinrichtung (240) vorgesehen ist, welche in einer Lösestellung des Betätigungskörpers (52) zwischen einer eine Bewegung des Betätigungskörpers (52) relativ zum Führungskörper (40) freigebenden Rastlösestellung und einer den Betätigungskörper (52) relativ zum Führungskörper (40) festlegenden Raststellung bewegbar ist und zumindest in der Lösestellung des Betätigungskörpers (52) durch ein Federelement in Richtung der Raststellung beaufschlagt ist.

10. Anhängekupplung nach Anspruch 9, **dadurch gekennzeichnet, dass** die Lösestellungsrasteinrichtung (240) in der Lösestellung des Betätigungskörpers (52) dann selbsttätig in die Raststellung übergeht, wenn der Schwenklagerkörper (14) die der Arbeitsstellung (A) entsprechende Drehstellung verlassen hat.

11. Anhängekupplung nach Anspruch 9 oder 10, **dadurch gekennzeichnet, dass** die Lösestellungsrasteinrichtung (240) bei Erreichen mindestens einer Funktionsstellung der Anhängekupplung von der Raststellung in die Rastlösestellung übergeht, dass insbesondere die Lösestellungsrasteinrichtung (240) in Abhängigkeit von mindestens einer bestimmten Drehstellung des Schwenklagerkörpers (14) von der Raststellung in die Rastlösestellung übergeht und /oder dass insbesondere die Lösestellungsrasteinrichtung (240) bei Erreichen mindestens einer vorgegebenen Drehstellung des Schwenklagerkörpers (14) von der Raststellung in die Rastlösestellung übergeht.

12. Anhängekupplung nach Anspruch 11, **dadurch gekennzeichnet, dass** die Lösestellungsrasteinrichtung (240) mechanisch gesteuert bei Erreichen der mindestens einen vorgegebenen Drehstellung des Schwenklagerkörpers (14) von der Raststellung in die Rastlösestellung übergeht.

13. Anhängekupplung nach einem der voranstehenden Ansprüche, **dadurch gekennzeichnet, dass** die Drehblockierkörper (54) um den Betätigungskörper (52) herum angeordnet sind, dass insbesondere der Betätigungskörper (52) sich über einen Winkelbereich um die Schwenkachse (22) erstreckende und in ihrem radialen Abstand zur Schwenkachse (22) variierende Keilflächen (66) aufweist, dass insbesondere der Drehblockierkörper (54) durch einen sich in radialer Richtung an den Schwenklagerkörper (14) anschließenden Führungskörper (40) geführt ist und dass insbesondere der Führungskörper (40) eine Führungshülse (44) mit der Führungsaufnahme (56) für den jeweiligen Drehblockierkörper (54) aufweist.

14. Anhängekupplung nach einem der voranstehenden Ansprüche, **dadurch gekennzeichnet, dass** der Führungskörper (40) Teil der fahrzeugfest angeordneten Schwenklagereinheit (20) ist, dass insbesondere der Führungskörper (40) ein Schwenklager für den Schwenklagerkörper (14) bildet, dass insbesondere mit dem Führungskörper (40) ein Lager für den Betätigungskörper (52) verbunden ist.

15. Anhängekupplung nach einem der voranstehenden Ansprüche, **dadurch gekennzeichnet, dass** der Betätigungskörper (52) von dem Führungskörper (40) umschlossen ist und dass der Schwenklagerkörper (14) den Führungskörper (40) umgreift, dass insbesondere der Schwenklagerkörper (14) einen die Schwenklagereinheit (20) außenliegend umschließenden Außenkörper bildet, der gegenüber der Schwenklagereinheit (20) in Richtung der Schwenkachse (22) unverschiebbar angeordnet ist, dass insbesondere das erste Ende des Kugelhalses (10) an dem Außenkörper (14) angesetzt ist und dass insbesondere der Schwenklagerkörper (14) einen die Drehblockiereinrichtung (50) außenliegend umschließenden Außenkörper bildet, der gegenüber dem Führungskörper (40) in Richtung der Schwenkachse (22) unverschiebbar angeordnet ist.

## Claims

1. A trailer coupling including a ball neck (10), which is movable between an operative position (A) and a rest position (R) and which has a pivot bearing body (14) arranged at a first end (12) and a coupling ball (18) arranged at a second end (16), a pivot bearing unit (20), which is arranged fixed to the vehicle and by means of which the pivot bearing body (14) is received such that it is pivotal about a pivot axis (22) between the operative position (A) and the rest position (R), and a rotation blocking arrangement (50) having at least two rotation blocking bodies (54), which are guided by means of a guide body (40) to be movable in a guide direction (58) having at least one component in the radial direction relative to the pivot axis (22), wherein, in the operative position (A), the rotation blocking bodies (54) are movable into a rotation blocking position by a movement in the guide direction (58) and, in this rotation blocking position, engage with a receptacle (60) in the pivot bearing body (14) in order to block a pivotal movement of the pivot bearing body (14) about the pivot axis (22) relative to the guide body (40), and are movable into a release position and, in this release position, are not in engagement with the respective receptacle (60), and having an actuating body (52) which has a respective cam face (66), that runs transversely to the guide direction (58), for each of the rotation blocking bodies (54) and which is arranged to be rotatable about the pivot axis (22) and as a result of the rotary movement whereof in a direction of actuation (72) the at least two rotation blocking bodies (54) are movable and urgeable in the guide direction (58),
**characterised in that** there is provided a rest position latching arrangement (270) that is independent of the rotation blocking arrangement (50) and that, in a free-movement position, permits movement of the pivot bearing body (14) in relation to the guide body (40) and, in a rest position latching position, fixes the pivot bearing body (14) such that it is fixed in rotation relative to the guide body (40) and, at least in the rotary position of the pivot bearing body (14) that corresponds to the rest position (R), changes over to the latching position automatically, as a result of a spring element (276) provided therein.

2. A trailer coupling according to Claim 1, **characterised in that**, once the rotary position of the pivot bearing body (14) that corresponds to the rest position (R) has been reached, the rest position latching arrangement (270) changes over to the latching position automatically, as a result of a spring element (276) provided therein.

3. A trailer coupling according to Claim 1 or 2, **characterised in that** the rest position latching arrangement (270) is releasable in dependence on a particular functional condition of the trailer coupling, **in that** in particular the rest position latching arrangement (270) is releasable at the start of pivoting of the pivot bearing body (14) from the rest position (R) into the operative position (A).

4. A trailer coupling according to Claim 3, **characterised in that** the rest position latching arrangement (270) is releasable by an electrically operable drive unit (182).

5. A trailer coupling according to one of Claims 3 to 4, **characterised in that** a drive unit (182), which is provided for pivoting the ball neck (10), changes the rest position latching arrangement (270) over to the free-movement position by way of a pivot drive for the ball neck (10), **in that** in particular the pivot drive changes over the rest position latching arrangement (270) to the free-movement position before pivoting of the pivot bearing body (14).

6. A trailer coupling according to one of the preceding claims, **characterised in that** the rest position latching arrangement (270) includes a latching body (274) that is arranged in one of the bodies (14, 40), is movable in a latching direction and is engageable with a latching receptacle (282) that is arranged in another of the bodies (40, 14), **in that** in particular the latching body (274) that is movable in the latching direction is arranged in the guide body (40), and **in that** the latching receptacle (282) is arranged in the pivot bearing body (14).

7. A trailer coupling according to Claim 6, **characterised in that** the latching direction runs parallel to the pivot axis (22).

8. A trailer coupling according to one of the preceding claims, **characterised in that** there is associated with the latching receptacle (282) a latching release body (284) which, on actuation, displaces the latching body (274) from the latching receptacle (282), **in that** in particular the latching release body (284) is actuable by a pivot drive for the pivot bearing body (14) and **in that** in particular
the pivot drive for pivoting the pivot bearing body (14) from the rest position (R) into the operative position (A) is first movable freely relative to the pivot bearing body (14) and then pivots the pivot bearing body (14) between the rest position (R) and the operative position (A), **in that** in particular the rest position latching arrangement (270) is changed over by the pivot drive during the free movement from the rest position latching position to the free-movement position.

9. A trailer coupling according to one of the preceding claims, **characterised in that** a release position latching arrangement (240) is provided which, in a release position of the actuating body (52), is movable between a latch release position that allows movement of the actuating body (52) in relation to the guide body (40) and a latching position that fixes the actuating body (52) in relation to the guide body (40), and which is urged in the direction of the latching position by a spring element, at least in the release position of the actuating body (52).

10. A trailer coupling according to Claim 9, **characterised in that** the release position latching arrangement (240) in the release position of the actuating body (52) changes over to the latching position automatically once the pivot bearing body (14) has left the rotary position that corresponds to the operative position (A).

11. A trailer coupling according to Claim 9 or 10, **characterised in that**, once at least one functional position of the trailer coupling has been reached, the release position latching arrangement (240) changes over from the latching position to the latch release position, **in that** in particular the release position latching arrangement (240) changes over from the latching position to the latch release position in dependence on at least one particular rotary position of the pivot bearing body (14) and/or **in that** in particular once at least one predetermined rotary position of the pivot bearing body (14) has been reached, the release position latching arrangement (240) changes over from the latching position to the latch release position.

12. A trailer coupling according to Claim 11, **characterised in that**, once the at least one predetermined rotary position of the pivot bearing body (14) has been reached, the release position latching arrangement (240) changes over from the latching position to the latch release position by mechanical control.

13. A trailer coupling according to one of the preceding claims, **characterised in that** the rotation blocking bodies (54) are arranged around the actuating body (52), **in that** in particular the actuating body (52) has cam faces (66) that extend over an angular region about the pivot axis (22) and vary in respect of their radial spacing from the pivot axis (22), **in that** in particular a guide body (40) that adjoins the pivot bearing body (14) in the radial direction guides the rotation blocking body (54), and **in that** in particular the guide body (40) has a guide sleeve (44) with the guide receptacle (56) for the respective rotation blocking body (54).

14. A trailer coupling according to one of the preceding claims, **characterised in that** the guide body (40) is part of the pivot bearing unit (20), which is arranged fixed to the vehicle , **in that** in particular the guide body (40) forms a pivot bearing for the pivot bearing body (14), **in that** in particular a bearing for the actuating body (52) is connected to the guide body (40).

15. A trailer coupling according to one of the preceding claims, **characterised in that** the actuating body (52) is surrounded by the guide body (40), and **in that** the pivot bearing body (14) embraces the guide body (40), **in that** in particular
the pivot bearing body (14) forms an external body which surrounds the pivot bearing unit (20) on the outside and which is arranged to be non-displaceable in the direction of the pivot axis (22) in relation to the pivot bearing unit (20), **in that** in particular the first end of the ball neck (10) is attached to the external body (14), and **in that** in particular the pivot bearing body (14) forms an external body which surrounds the rotation blocking unit (50) on the outside, which is arranged to be non-displaceable in the direction of the pivot axis (22) in relation to the guide body (40).

## Revendications

1. Attelage de remorque comprenant un col de rotule (10), déplaçable entre une position de travail (A) et une position de repos (R), avec un corps de palier pivotant (14) agencé contre une première extrémité (12) et une rotule d'attelage (18) agencée contre une seconde extrémité (16), une unité de palier pivotant (20) agencée de manière fixe contre le véhicule, au moyen de laquelle le corps de palier pivotant (14) est reçu de façon à pouvoir être pivoté autour d'un axe de pivotement (22) entre la position de travail (A) et la position de repos (R), et un dispositif de blocage en rotation (50) avec au moins deux corps de blocage en rotation (54) qui sont guidés de façon déplaçable au moyen d'un corps de guidage (40) dans une direction de guidage (58) avec au moins une composante dans une direction radiale, dans lequel les corps de blocage en rotation dans la position de travail (A) peuvent être amenés, par un déplacement dans la direction de guidage (58), dans une position de blocage en rotation (54), et sont en prise dans celle-ci avec un logement (60) dans le corps de palier pivotant (14) afin de bloquer un déplacement pivotant du corps de palier pivotant (14) autour de l'axe de pivotement (22) par rapport au corps de guidage (40), et peuvent être amenés dans une position de libération et sont dans celle-ci hors de prise avec le logement (60) respectif, et avec un corps d'actionnement (52) présentant pour chacun des corps de blocage en rotation (54) respectivement une surface de calage (66) se déroulant transversalement à la direction de guidage (58) et agencé en rotation autour de l'axe de pivotement (22), par le déplacement en rotation duquel corps d'actionnement dans une direction d'actionnement (72) les au moins deux corps de blocage en rotation (54) peuvent être déplacés et sollicités dans la direction de guidage (58),
**caractérisé en ce qu'**est prévu, indépendant du dispositif de blocage en rotation (50), un dispositif d'encliquetage en position de repos (270) qui dans une position de libération autorise un déplacement du corps de palier pivotant (14) par rapport au corps de guidage (40) et dans une position d'encliquetage en position de repos établit le corps de palier pivotant (14) solidairement en rotation par rapport au corps de guidage (40), et au moins dans la position de rotation correspondant à la position de repos (R) du corps de palier pivotant (14) solidairement en rotation passe automatiquement dans la position d'encliquetage du fait d'un élément de ressort (276) prévu dans celui-ci.

2. Attelage de remorque selon la revendication 1, **caractérisé en ce que**, lorsqu'est atteinte la position de rotation correspondant à la position de repos (R) du corps de palier pivotant (14), le dispositif d'encliquetage en position de repos (270) passe automatiquement dans la position d'encliquetage du fait d'un élément de ressort (276) prévu dans celui-ci.

3. Attelage de remorque selon la revendication 1 ou 2, **caractérisé en ce que** le dispositif d'encliquetage en position de repos (270) peut être libéré en fonction d'un état fonctionnel déterminé de l'attelage de remorque, **en ce qu'**en particulier au début d'un pivotement du corps de palier pivotant (14) le dispositif d'encliquetage en position de repos (270) peut être libéré de la position de repos (R) vers la position de travail (A).

4. Attelage de remorque selon la revendication 3, **caractérisé en ce que** le dispositif d'encliquetage en position de repos (270) peut être libéré par une unité d'entraînement (182) pouvant être entraînée électriquement.

5. Attelage de remorque selon l'une des revendications 3 à 4, **caractérisé en ce qu'**une unité d'entraînement (182) prévue pour faire pivoter le col de rotule (10) transfère, via un entraînement pivotant pour le col de rotule (10), le dispositif d'encliquetage en position de repos (270) dans la position de libération, **en ce qu'**en particulier avant un pivotement du corps de palier pivotant (14), l'entraînement pivotant transfère le dispositif d'encliquetage en position de repos (270) dans la position de libération.

6. Attelage de remorque selon l'une des revendications précédentes, **caractérisé en ce que** le dispositif d'encliquetage en position de repos (270) comprend un corps d'encliquetage (274) agencé dans l'un des corps (14, 40) et déplaçable dans une direction d'encliquetage, lequel corps d'encliquetage peut être amené en prise avec un logement d'encliquetage (282) agencé dans un autre des corps (14, 40), **en ce qu'**en particulier le corps d'encliquetage (274) déplaçable dans la direction d'encliquetage est agencé dans le corps de guidage (40) et **en ce que** le logement d'encliquetage (282) est agencé dans le corps de palier pivotant (14).

7. Attelage de remorque selon la revendication 6, **caractérisé en ce que** la direction d'encliquetage se déroule en parallèle de l'axe de pivotement (22).

8. Attelage de remorque selon l'une des revendications précédentes, **caractérisé en ce qu'**au logement d'encliquetage (282) est affecté un corps de libération d'encliquetage (284) qui lors d'un actionnement refoule le corps d'encliquetage (274) hors du logement d'encliquetage (282), **en ce qu'**en particulier le corps de libération d'encliquetage (284) peut être actionné par un entraînement pivotant pour le corps de palier pivotant (14) et **en ce qu'**en particulier, pour faire pivoter le corps de palier pivotant (14), l'entraînement pivotant peut être déplacé de la position de repos (R) dans la position de travail (A) tout d'abord en course libre par rapport au corps de palier pivotant (14) puis fait pivoter le corps de palier pivotant (14) entre la position de repos (R) et la position de travail (A), **en ce qu'**en particulier le dispositif d'encliquetage en position de repos (270) est transféré par l'entraînement pivotant pendant la course libre de la position d'encliquetage au repos dans la position de libération.

9. Attelage de remorque selon l'une des revendications précédentes, **caractérisé en ce qu'**un dispositif d'encliquetage en position de libération (240) est prévu, lequel dans une position de libération du corps d'actionnement (52) est déplaçable entre une position de libération d'encliquetage libérant un déplacement du corps d'actionnement (52) par rapport au corps de guidage (40) et une position d'encliquetage immobilisant le corps d'actionnement (52) par rapport au corps de guidage (40) et au moins dans la position de libération du corps d'actionnement (52) est sollicité par un élément de ressort dans la direction de la position d'encliquetage.

10. Attelage de remorque selon la revendication 9, **caractérisé en ce que** le dispositif d'encliquetage en position de libération (240) dans la position de libération du corps d'actionnement (52) passe automatiquement dans la position d'encliquetage à partir du moment où le corps de palier pivotant (14) a quitté la position de rotation correspondant à la position de travail (A).

11. Attelage de remorque selon la revendication 9 ou 10, **caractérisé en ce que** le dispositif d'encliquetage en position de libération (240), lorsqu'est atteinte au moins une position fonctionnelle de l'attelage de remorque, passe de la position d'encliquetage dans la position de libération d'encliquetage, **en ce qu'**en particulier le dispositif d'encliquetage en position de libération (240) passe, en fonction d'au moins une position de rotation déterminée du corps de palier pivotant (14), de la position d'encliquetage dans la position de libération d'encliquetage et/ou **en ce qu'**en particulier le dispositif d'encliquetage en position de libération (240) passe, lorsqu'est atteinte au moins une position de rotation prédéfinie du corps de palier pivotant (14), de la position d'encliquetage dans la position de libération d'encliquetage.

12. Attelage de remorque selon la revendication 11, **caractérisé en ce que** le dispositif d'encliquetage en position de libération (240), lorsqu'est atteinte la au moins une position de rotation prédéfinie du corps de palier pivotant (14), passe, commandé mécaniquement, de la position d'encliquetage dans la position de libération d'encliquetage.

13. Attelage de remorque selon l'une des revendications précédentes, **caractérisé en ce que** les corps de blocage en rotation (54) sont agencés autour du corps d'actionnement (52), **en ce qu'**en particulier le corps d'actionnement (52) présente des surfaces de calage (66) s'étendant selon une plage angulaire autour de l'axe de pivotement (22) et variant dans sa distance radiale par rapport à l'axe de pivotement (22), **en ce qu'**en particulier le corps de blocage en rotation (54) est guidé par un corps de guidage (40) se raccordant au corps de palier pivotant (14) dans une direction radiale et **en ce qu'**en particulier le corps de guidage (40) présente une douille de guidage (44) avec le logement de guidage (56) pour le corps de blocage en rotation (54) respectif.

14. Attelage de remorque selon l'une des revendications précédentes, **caractérisé en ce que** le corps de guidage (40) fait partie de l'unité de palier pivotant (20) agencée de manière fixe contre le véhicule, **en ce qu'**en particulier le corps de guidage (40) forme un palier pivotant pour le corps de palier pivotant (14), et **en ce qu'**en particulier un palier pour le corps d'actionnement (52) est raccordé au corps de guidage (40).

15. Attelage de remorque selon l'une des revendications précédentes, **caractérisé en ce que** le corps d'actionnement (52) est entouré par le corps de guidage (40) et **en ce que** le corps de palier pivotant (14) enserre le corps de guidage (40), **en ce qu'**en particulier le corps de palier pivotant (14) forme un corps extérieur situé à l'extérieur l'unité de palier pivotant (20) et entourant celle-ci, lequel corps extérieur est agencé de façon non coulissante par rapport à l'unité de palier pivotant (20) dans la direction de l'axe de pivotement (22), **en ce qu'**en particulier la première extrémité du col de rotule (10) est appliquée contre le corps extérieur (14) et **en ce qu'**en particulier le corps de palier pivotant (14) forme un corps extérieur situé à l'extérieur du dispositif de blocage en rotation (50) et entourant celui-ci, lequel corps extérieur est agencé de façon non coulissante par rapport au corps de guidage (40) dans la direction de l'axe de pivotement (22).
